# EUROPEAN PATENT SPECIFICATION

(11) **EP 3 758 257 B1**
(45) Date of publication and mention of the grant of the patent: **13.03.2024**
(21) Application number: 19305867.4
(22) Date of filing: 27.06.2019
(51) Int. Cl.: H04B 10/079, H04B 10/297

(54) **TECHNIQUE FOR MONITORING OPTICAL PATHS**
VERFAHREN ZUR ÜBERWACHUNG VON OPTISCHEN PFADEN
TECHNIQUE PERMETTANT DE SURVEILLER DES TRAJECTOIRES OPTIQUES

(43) Date of publication of application: 30.12.2020
(73) Proprietor: Alcatel Submarine Networks, 91620 Nozay (FR)
(72) Inventor: RUGGERI, Stephane, 91620 NOZAY (FR)
(74) Representative: Loyer & Abello

(56) References cited:
- WO-A1-2018/210470
- WO-A1-2018/210586
- JP-A- 2000 209 151
- US-A- 6 008 934

## Description

### BACKGROUND

### Field

Various example embodiments relate to optical communication equipment and, more specifically but not exclusively, to methods and apparatus for transmitting optical signals using amplified long-haul optical links.

### Description of the Related Art

This section introduces aspects that may help facilitate a better understanding of the disclosure. Accordingly, the statements of this section are to be read in this light and are not to be understood as admissions about what is in the prior art or what is not in the prior art.

Subsea network operators are facing a fast growth in bandwidth demand, in part due to the development and deployment of cloud-based services. As a result, they need to optimize the capacity and performance of their fiber-optic cable plants to enable the corresponding networks to efficiently handle the increasing data flows. Due to this need, one of the requirements to telecom equipment manufacturers is to provide the network operator(s) with systems that can be used to operate the submerged plant elements in a manner that guarantees fast fault detection and mitigation, improved maintainability, good performance characteristics throughout the cable-plant's lifespan, upgradable capacity, and/or any other pertinent benchmarks. It is also desirable for the cable plant to be amenable to relatively low-cost implementation and/or maintenance.

### SUMMARY OF SOME SPECIFIC EMBODIMENTS

Disclosed herein are various embodiments of a bidirectional, multi-pair optical repeater having 2N unidirectional optical amplifiers and a supervisory optical circuit connected to optically couple the corresponding 2N optical paths through the repeater, where N is greater than one. The term "multi-pair" refers to the ability of a bidirectional, multi-pair optical repeater to support the monitoring of multiple pairs of unidirectional optical paths, each pair having two unidirectional optical paths in opposite directions, as opposed to a "single-pair" optical repeater that is capable of supporting the monitoring of only a single pair of such unidirectional optical paths. The term "optical path" refers to the flow of optical signals from a transmitting node (e.g., a first landing station of a submarine communication network) to a receiving node (e.g., a second landing station). In long-haul submarine and terrestrial optical communication networks, each optical path includes two or more multi-wavelength optical fibers connected end-to-end by one or more optical repeaters that amplify the optical signals. In some embodiments, multiple, parallel optical fibers are bundled into multi-fiber cables that are connected end-to-end by optical repeaters. As used in this specification, the term "multi-fiber cable" is intended to cover multi-core fibers having multiple optical cores embedded within a single cladding as well as cables in which multiple, individual fibers are enclosed within a metallic tube. In some embodiments, addition to carrying communication signals, the optical paths can also carry monitoring signals such as supervisory signals in one of two designated supervisory wavelengths as well as optical time-domain reflectometer (OTDR) signals, which may have any suitable in-band or out-of-band wavelength.

In an example embodiment, the supervisory optical circuit is symmetrical in the sense that it enables the 2N optical input/output port pairs of the repeater to be interchangeable and functionally equivalent at least with respect to two supervisory wavelengths and some in-band and/or out-of-band wavelengths. This symmetry can advantageously be used, e.g., to improve the installation process directed at installing such optical repeaters in an undersea cable system. For example, a single directional orientation of the optical repeaters does not need to be maintained throughout the cable system, which can significantly reduce the risk and/or cost of installation errors.

According to an example embodiment, provided is an apparatus comprising an optical repeater having (i) N first input ports and *N* first output ports for *N* first optical paths and (ii) *N* second input ports and *N* second output ports for *N* second optical paths, N>1, each first optical path having a corresponding second optical path. The optical repeater comprises N first optical amplifiers, each first optical amplifier connecting a first input port and a corresponding first output port for a corresponding first optical path; N second optical amplifiers, each second optical amplifier connecting a second input port and a corresponding second output port for a corresponding second optical path; and a set of shared optical elements, wherein each optical element is configured to receive, modify, and forward optical signals between each of the N first optical paths and its corresponding second optical path, at least one of the shared optical elements comprises a filter or an attenuator.

According to another example embodiment, provided is a method for monitoring optical paths of an optical communication system having *N* first optical paths and *N* second optical paths between a first landing station and a second landing station, N>1, each first optical path having a corresponding second optical path. The method comprises receiving, at the optical repeater of the above apparatus, a first monitoring signal from the first landing station via a first optical path; modifying the first monitoring signal by at least one shared optical element of the optical repeater; and transmitting, from the optical repeater, the modified first monitoring signal to the first landing station via the second optical path corresponding to the first optical path.

According to yet another example embodiment, provided is a method for monitoring optical paths of an optical communication system having N first optical paths and N second optical paths between a first landing station and a second landing station, N>1, each first optical path having a corresponding second optical path, the first optical paths correspond to one or more bidirectional first P-fiber optical cables, and the second optical paths correspond to one or more bidirectional second P-fiber optical cables, P>1. The method comprises transmitting a first monitoring signal from the first landing station via a first optical path, wherein the first monitoring signal is coupled into a second optical path adjacent to the first optical path as an induced first monitoring signal propagating towards the first landing station; and receiving the induced first monitoring signal at the first landing station via the second optical path.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of an optical communication system having a single pair of unidirectional optical paths according to an embodiment;
FIGs. 2A-2B graphically illustrate certain spectral characteristics of an example narrow band-pass optical filter that can be used in a supervisory optical circuit of an optical repeater of the optical communication system of FIG. 1 according to an embodiment;
FIG. 3 shows a block diagram of a single-pair optical repeater that can be used in the optical communication system of FIG. 1 according to an embodiment;
FIG. 4 shows a block diagram of a series of single-pair optical repeaters of FIG. 3 that can be used in the optical communication system of FIG. 1 according to an embodiment;
FIG. 5 shows a block diagram of a series of single-pair optical repeaters of FIG. 3 that can be used in the optical communication system of FIG. 1 according to another embodiment;
FIG. 6 shows a block diagram of the single-pair optical repeater of FIG. 3 that illustrates an optical supervisory circuit used therein according to an embodiment;
FIG. 7 shows a block diagram of the single-pair optical repeater of FIG. 3 that illustrates an optical supervisory circuit used therein according to another embodiment;
FIG. 8 shows a block diagram of an optical communication system having multiple pairs of unidirectional optical paths according to an embodiment;
FIG. 9 shows a block diagram of a multi-pair optical repeater for the optical communication system of FIG. 8 that illustrates an optical supervisory circuit used therein according to an embodiment;
FIG. 10 shows a block diagram of a multi-pair optical repeater for the optical communication system of FIG. 8 that illustrates an optical supervisory circuit used therein according to another embodiment;
FIG. 11 shows a block diagram of another optical communication system having multiple pairs of unidirectional optical paths according to an embodiment;
FIG. 12A shows a block diagram of yet another optical communication system having multiple pairs of unidirectional optical paths according to an embodiment;
FIG. 12B shows a block diagram of the optical communication system of FIG. 12A representing the OTDR monitoring of one of the six outer fibers that cannot be monitored using the single-pair optical repeaters; and
FIG. 13 shows a block diagram of still another optical communication system having multiple pairs of unidirectional optical paths according to an embodiment.

### DETAILED DESCRIPTION

Some embodiments may benefit from the use of features disclosed in European Patent EP3404855 and EP3404852, both filed on 17 May 2017, in European Patent No. EP3599726, filed on 25 July 2018, and in European Patent EP3696997, filed on 15 February 2019.

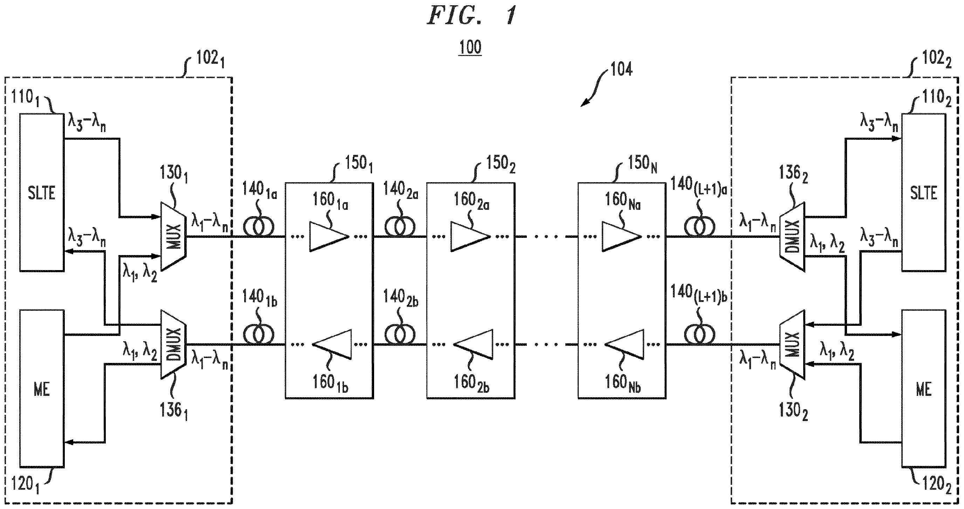

FIG. 1 shows a block diagram of an optical communication system 100 having a single pair of unidirectional optical paths according to an embodiment. In the shown embodiment, system 100 comprises landing stations **102₁** and **102₂** connected by way of a wet plant **104.** Landing stations **102₁** and **102₂** are typically further connected to respective terrestrial networks (not explicitly shown in FIG. 1). In an alternative embodiment, system **100** may have additional landing stations connected to wet plant **104,** as known in the pertinent art, e.g., using one or more branching units (not explicitly shown in FIG. 1).

In an example embodiment, wet plant **104** comprises an undersea cable system that includes, *inter alia,* submersible single-pair optical repeaters **150₁-150_{L}** serially connected by spans **140** of optical fiber, e.g., as indicated in FIG. 1, where L is a positive integer. In the shown embodiment, each span **140ᵢ** includes two optical fibers, which are labeled **140ᵢₐ** and **140_{1b}**, respectively, where i=1, 2, ..., L+1. The number L of single-pair optical repeaters **150** used in wet plant **104** depends on the particular embodiment and may be in the range, e.g., from 1 to ~200. A typical length of a fiber span **140ᵢ** may range from ~50 km to ~100 km, depending on the distance between landing stations **102₁** and **102₂**.

In the shown embodiment, a single-pair optical repeater **150ⱼ** comprises two optical amplifiers (OAs) **160ⱼₐ** and **160_{jb}**, where j=1, 2, ..., L. Optical amplifier **160ⱼₐ** is configured to amplify optical signals traveling towards landing station **102₂.** Optical amplifier **160_{jb}** is similarly configured to amplify optical signals traveling towards landing station **102₁.** In an example embodiment, an optical amplifier **160ⱼ** can be implemented as known in the pertinent art, e.g., using an erbium-doped fiber, a gain-flattening filter, and one or more laser-diode pumps. The laser diodes can be powered by a DC current from the corresponding shore-based power-feeding equipment (PFE, not explicitly shown in FIG. 1), fed through the electrical conductor(s) of the corresponding submarine cable, which also typically contains optical fibers **140ᵢₐ** and **140_{ib}.** In some embodiments, the electrical conductors (e.g., wires) may be located near the center of the submarine cable. In some other embodiments, the electrical conductors may have a generally tubular shape, e.g., with a ring-like cross-section in a plane orthogonal to the longitudinal axis of the submarine cable.

In an alternative embodiment, optical repeaters **150** can be designed for two, three, four, or more pairs of optical fibers **140ᵢ** connected thereto at each side thereof. For example, an optical repeater **150** designed to be compatible with a four-fiber-pair submarine cable typically includes eight optical amplifiers **160** arranged in four amplifier pairs, each pair being similar to optical amplifiers **160ⱼₐ** and **160_{jb}.**

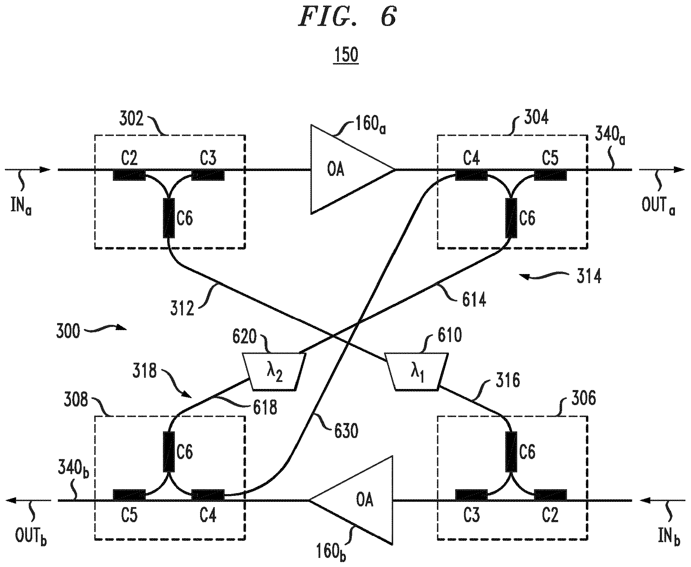

Single-pair optical repeater **150ⱼ** may also comprise a supervisory optical circuit (not explicitly shown in FIG. 1) that enables monitoring equipment (ME) units **120₁** and **120₂** located at landing stations **102₁** and **102₂,** respectively, to monitor the operating status of the optical repeaters. Example embodiments of the supervisory optical circuit that can be used in single-pair optical repeater **150ⱼ** are described, e.g., in reference to FIGs. 6-7. Some embodiments of the supervisory optical circuit may benefit from the use of at least some features disclosed in the above-cited European Patents.

In an example embodiment, each of ME units **120₁** and **120₂** is configured to use dedicated supervisory wavelengths (labeled λ₁ and λ₂) to generate respective supervisory signals that can be sent through the corresponding fiber(s) **140** towards the remote landing station **102.** The supervisory optical circuit of each single-pair optical repeater **150ⱼ** is configured to loop back, in the opposite direction, at least a portion of a supervisory signal. As a result, ME unit **120₁** can receive a looped-back supervisory signal comprising the portions of the original supervisory signal returned to that ME unit by the different supervisory optical circuits of different single-pair optical repeaters **150₁-150_{N}.** Similarly, ME unit **120₂** can receive a looped-back supervisory signal comprising the portions of the corresponding supervisory signal returned to that ME unit by the different supervisory optical circuits of different single-pair optical repeaters **150₁-150_{N}.** The looped-back supervisory signals received by ME units **120₁** and **120₂** can be processed and analyzed to determine the present operating status and/or certain operating characteristics of at least some or all of single-pair optical repeaters **150₁-150_{N}** in wet plant **104.** The determined parameters may include but are not limited to: (i) input and output signal levels and the gains of some or all individual optical amplifiers (OAs) **160ⱼₐ** and **160_{jb};** (ii) non-catastrophic faults in individual optical fibers **140ᵢ**, such as any gradual loss increases therein; and (iii) catastrophic failures in individual single-pair optical repeaters **150ⱼ** and/or optical fibers **140ᵢ.**

Landing station **102₁** comprises a submarine line terminal equipment (SLTE) unit **110₁** and ME unit **120₁** connected to wet plant **104** by way of a wavelength multiplexer (MUX) **130₁** and a wavelength de-multiplexer (DMUX) **136₁** as indicated in FIG. 1. In an example embodiment, SLTE unit **110₁** includes a wavelength-division-multiplexing (WDM) transceiver (not explicitly shown in FIG. 1) configured to transmit and receive payload-carrying optical signals using carrier wavelengths λ₃-λₙ, where n generally denotes the number of WDM channels in system **100.** The number n can be in the range, e.g., between ~10 and ~150.

In an example embodiment, carrier wavelengths λ₁-λₙ can be selected in accordance with a frequency (wavelength) grid, such as a frequency grid that complies with the ITU-T G.694.1 Recommendation. The frequency grid used in system **100** can be defined, e.g., in the frequency range from about 184 THz to about 201 THz, with a 100, 50, 25, or 12.5-GHz spacing of the channels therein. While typically defined in frequency units, the parameters of the grid can equivalently be expressed in wavelength units. For example, in the wavelength range from about 1528 nm to about 1568 nm, the 100-GHz spacing between the centers of neighboring WDM channels is equivalent to approximately 0.8-nm spacing. In alternative embodiments, other fixed or flexible (flex) frequency grids can be used as well.

In operation, MUX **130₁** multiplexes the optical signals of carrier wavelengths λ₃-λₙ generated by SLTE unit **110₁** and the supervisory optical signals of carrier wavelengths λ₁ and λ₂, and applies the resulting multiplexed optical signal to optical fiber **140₁ₐ.** DMUX **136₁** de-multiplexes a multiplexed optical signal received from optical fiber **140_{1b}** into two portions. The first portion has optical signals of carrier wavelengths λ₃-λₙ and is directed to SLTE unit **110₁.** The second portion has the looped-back supervisory optical signals of carrier wavelengths λ₁ and λ₂ and is directed to ME unit **120₁.**

In an example embodiment, ME unit **120₁** comprises an optical time-domain reflectometer (OTDR, not explicitly shown in FIG. 1) configured to optically probe wet plant **104** using carrier wavelengths λ₁ and λ₂. For example, ME unit **120₁** can be designed to perform OTDR measurements by detecting and processing the looped-back supervisory optical signals received from single-pair optical repeaters **150₁-150_{N}.** In general, ME unit **120₁** can be configured to use any suitable OTDR method. Some embodiments of ME unit **120₁** may benefit from the use of at least some OTDR features and/or techniques disclosed, e.g., in U.S. Patent Nos. 9,341,543, 9,310,274, 9,240,836, 9,170,173, 9,143,228, 9,042,721, 9,036,991, 9,008,503, 8,942,556, 8,837,938, 8,805,183, 8,502,964, and 8,280,253 and U.S. Patent Application Publication Nos. 2011/0216996, 2013/0216176, and 2014/0212130.

In some embodiments, landing station **102₁** can be designed and configured to perform OTDR measurements in a normal operating mode, e.g., by detecting and processing reflected and/or backscattered optical signals having carrier wavelengths λ₃-λₙ.

Alternatively or in addition, landing station **102₁** can be designed and configured to perform OTDR measurements in a special optical-link monitoring (OLM) operating mode, during which the corresponding transceiver generates and applies to wet plant **104** a modulated optical signal with a waveform that facilitates OTDR measurements, e.g., in terms of providing a higher signal-to-noise ratio (SNR) and/or a better spatial resolution for OTDR measurements than those technically achievable with payload-carrying optical signals. Transmission of payload data may be temporarily halted while landing station **102₁** is in the OLM operating mode and may be resumed when the corresponding transceiver is switched back to the normal operating mode. This particular type of OTDR measurements can generally be performed using any suitable wavelength, with the possible exception of the wavelengths λ₁ and λ₂. The used wavelength may not necessarily coincide with any of the wavelengths λ₃-λₙ.

In different embodiments, some OLM functions can be based on different types of OTDR measurements. For example, in one possible embodiment, landing station **102₁** can be designed and configured to perform OTDR measurements by detecting and processing the elastically reflected light and/or backscattered light produced due to Rayleigh scattering in wet plant **104.** In another possible embodiment, landing station **102₁** can be designed and configured to perform OTDR measurements by detecting and processing the backscattered light produced due to Brillouin scattering in wet plant **104.** In yet another possible embodiment, landing station **102₁** can be designed and configured to perform OTDR measurements by detecting and processing the backscattered light produced due to Raman scattering in wet plant **104.** In yet another possible embodiment, landing station **102₁** can be designed and configured to perform coherent OTDR (COTDR) measurements.

Landing station **102₂** is generally analogous to landing station **102₁** and comprises an SLTE unit **110₂,** ME unit **120₂,** a MUX **130₂,** and a DMUX **136₂.** The analogous elements/components of the two landing stations are labeled in FIG. 1 using the same numerical labels, but with different respective subscripts. The descriptions of SLTE unit **110₁,** ME unit **120₁,** MUX **130₁,** and DMUX **136₁** of landing station **102₁** given above generally apply to SLTE unit **110₂,** ME unit **120₂,** MUX **130₂,** and DMUX **136₂,** respectively, of landing station **102₂** and are not repeated here.

In various embodiments, each of landing stations **102₁** and **102₂** may further include one or more of the following conventional elements/components: (i) power feeding equipment; (ii) system supervisory equipment; (iii) network management equipment; (iv) cable termination boxes; (v) network protection equipment; and (vi) various interface circuits.

In some embodiments, a single respective carrier wavelength can be used at each of ME units **120₁** and **120₂** to generate supervisory optical signals. In some other embodiments, more than two carrier wavelengths of the WDM set λ₁-λₙ can be allocated for supervisory functions. A person of ordinary skill in the art will understand, without undue experimentation, how to modify MUXes **130,** DMUXes **136,** and/or other pertinent system components to be compatible with such alternative WDM-channel allocations for supervisory functions.

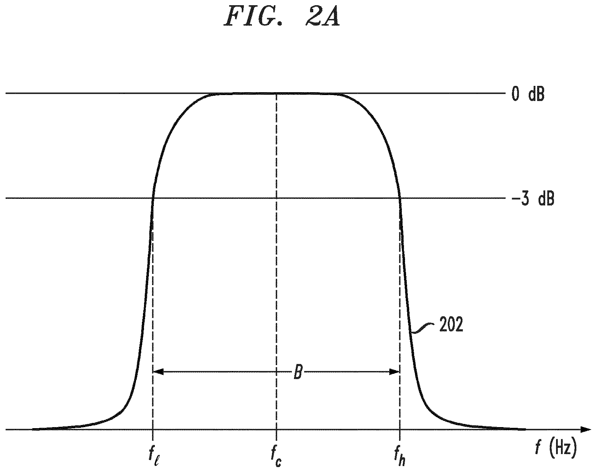

In an example embodiment, a supervisory optical circuit of single-pair optical repeater **150ⱼ** is implemented using narrow band-pass optical filters (NBPOFs, not explicitly shown in FIG. 1, see FIGs. 2A-2B and 6-7).

As used herein the term "narrow band-pass optical filter" refers to an optical device that passes optical frequencies (wavelengths) within a certain relatively narrow range and rejects (or strongly attenuates) optical frequencies outside that range. The bandwidth B of the narrow band-pass optical filter is much smaller than any of the carrier frequencies that are being passed therethrough. For example, a center frequency of the pass band can be ~200 THz, whereas the bandwidth B can be ~100 GHz or ~10 GHz, which is approximately three or four orders of magnitude smaller.

The planar-lightwave-circuit (PLC) technology enables telecom equipment manufacturers to produce narrow band-pass optical filters in large quantities and/or relatively inexpensively. There are many mature filter designs from which the manufacturer can choose for the intended application. In addition, a PLC-based narrow band-pass optical filter can be made tunable in a relatively straightforward manner, without an expensive and/or time-consuming redesign.

Various embodiments disclosed herein can beneficially leverage some of these and other technical features of narrow band-pass optical filters to provide a supervisory optical circuit for single-pair optical repeater **150ⱼ** that is capable of meeting and/or exceeding the operating requirements of network operator(s) and is amenable to low-cost implementation. In addition, at least some of the disclosed embodiments can beneficially provide significant flexibility in the manner in which supervisory optical circuits can be designed and/or operated.

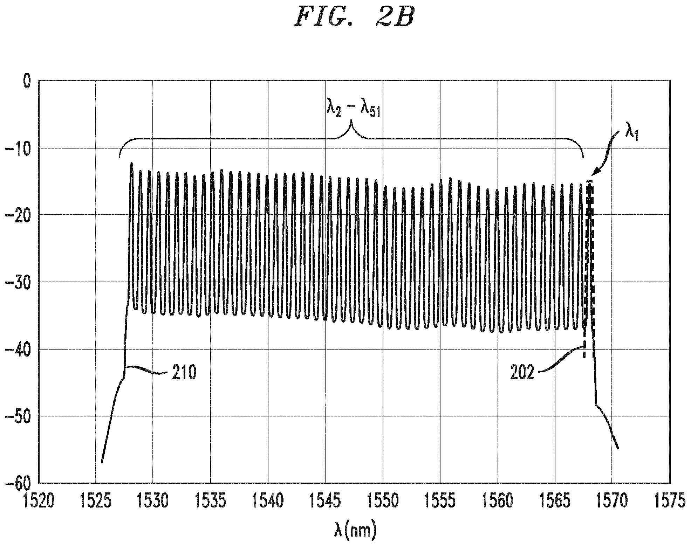

FIGs. 2A-2B graphically illustrate certain spectral characteristics of an example narrow band-pass optical filter that can be used in the supervisory optical circuit of single-pair optical repeater **150ⱼ** according to an embodiment. More specifically, FIG. 2A graphically shows a magnitude transfer function **202** versus frequency for a narrow band-pass optical filter. FIG. 2B graphically shows the spectral alignment of transfer function **202** with a spectrum **210** of an example WDM signal that can be used in system **100.**

Referring to FIG. 2A, marked on the abscissa are (i) the center frequency f_{c} of transfer function **202** and (ii) the frequencies fₗ and fₕ of the half-power points (gain -3 dB relative to the center portion) of transfer function **202.** The bandwidth B of transfer function **202** can typically be defined as the difference between the frequencies fₕ and fi, although an alternative definition is also possible.

Depending on the embodiment, the bandwidth B can be, e.g., 100, 50, 25, or 12.5 GHz. Other values of the bandwidth B can also be used, as long as the selected bandwidth value is compatible with the system's WDM configuration and/or WDM-channel assignment, e.g., as further illustrated in FIG. 2B.

The center frequency f_{c} can belong to any telecom band. As known to those skilled in the pertinent art, the frequencies (wavelengths) used for optical communications are conventionally divided into several spectral bands in which optical fibers have relatively low transmission losses. For example, the spectral range between 1260 nm and 1625 nm is divided into five telecom bands that are typically referred to as O-, E-, S-, C-, and L-bands. The O-band is in the wavelength range between 1260 nm and 1360 nm. The E-band is in the wavelength range between 1360 nm and 1460 nm. The S-band is in the wavelength range between 1460 nm and 1530 nm. The C-band is in the wavelength range between 1530 nm and 1565 nm. The L-band is in the wavelength range between 1565 nm and 1625 nm.

In an example embodiment, a narrow band-pass optical filter does not employ a mirror configured to reflect in an opposite direction light applied thereto, the light being spectrally located within the bandwidth B.

Referring to FIG. 2B, spectrum **210** has fifty-one peaks corresponding to carrier wavelengths λ₁-λ₅₁ (i.e., n=51). Transfer function **202** is illustratively shown as being spectrally aligned with the peak corresponding to carrier wavelength λ₁, which is one of the dedicated supervisory wavelengths in system **100** (see FIG. 1). The center frequency f_{c} and bandwidth B of transfer function **202** are such that a supervisory optical signal having carrier wavelength λ₁ can pass through the corresponding narrow band-pass optical filter with little attenuation, whereas any of the optical signals having carrier wavelengths λ₂-λ₅₁ is rejected or significantly attenuated due to being outside of the bandwidth B.

A person of ordinary skill in the art will understand that a narrow band-pass optical filter corresponding to any of the additional dedicated supervisory wavelengths (e.g., λ₂, FIG. 1) can similarly be spectrally aligned with the peak corresponding to that carrier wavelength in spectrum **210.**

In an example embodiment, any of the narrow band-pass optical filters used in supervisory optical circuits disclosed herein can be implemented as a part of the corresponding planar lightwave circuit. In an example design, such a narrow band-pass optical filter does not employ a mirror configured to reflect, in an opposite direction, light applied to the filter by the corresponding supervisory optical circuit, e.g., if the light has a carrier frequency between fₕ and fₗ (see FIG. 2A). As used herein, the term "mirror" should be construed to cover, *inter alia,* conventional broadband mirrors, wavelength-selective reflectors, and Bragg reflectors.

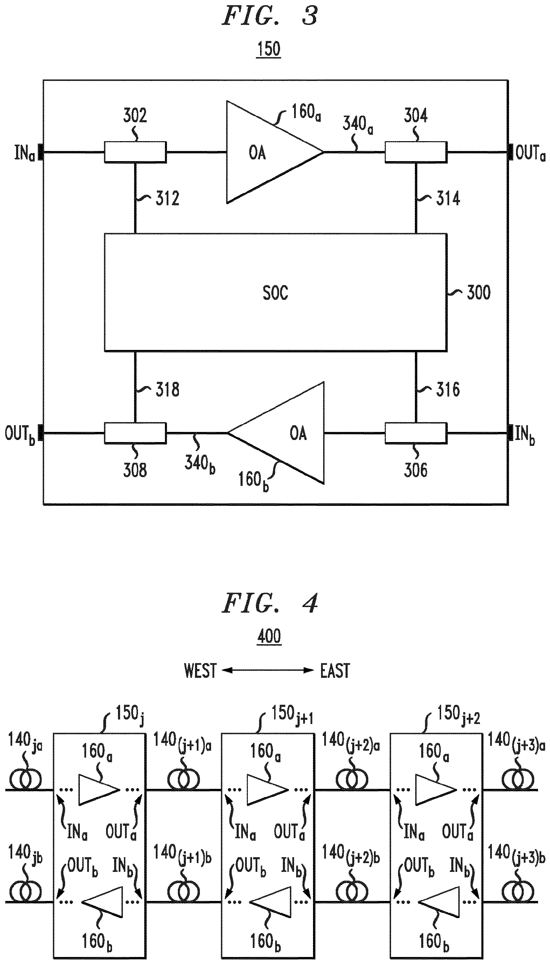

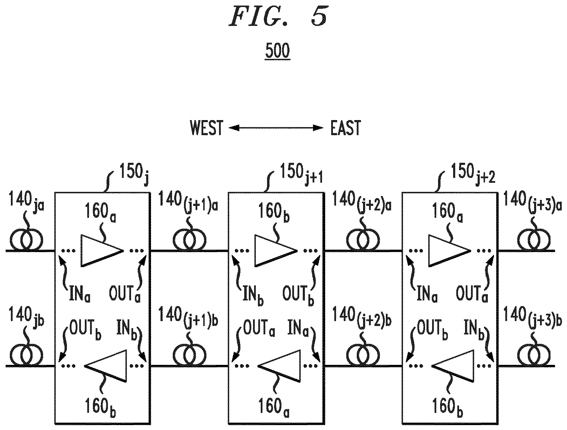

FIG. 3 shows a block diagram of a single-pair optical repeater **150** according to an embodiment. Single-pair optical repeater **150** has optical input ports **INₐ** and **IN_{b}** and optical output ports **OUTₐ** and **OUT_{b}** that can be used to connect the single-pair optical repeater to optical fibers of wet plant **104.** For example, if this single-pair optical repeater **150** is deployed in system **100** (FIG. 1) as single-pair optical repeater **150ⱼ₊₁,** then the ports **INₐ, IN_{b}, OUTₐ,** and **OUT_{b}** can be connected to optical fibers **140₍ⱼ₊₁₎ₐ, 140_{(j+1)b}, 140₍ⱼ₊₂₎ₐ,** and **140_{(j+2)b},** e.g., as described in more detail below in reference to FIGs. 4 and 5.

In an example embodiment, circuit **300** can receive and emit optical signals on any of the ports **INₐ, IN_{b}, OUTₐ,** and **OUT_{b},** with each of these ports being a bidirectional optical port. The designation of the ports in this specification and in the appended claims as "input ports" or "output ports" should not be construed as limiting these ports to unidirectional configurations and is used to facilitate better understanding of certain circuit functions. For example, the ports **INₐ** and **IN_{b}** do operate as optical input ports for payload signals. The ports **OUTₐ** and **OUT_{b}** similarly operate as optical output ports for the payload signals.

Optical amplifier (OA) **160ₐ** of single-pair optical repeater **150** is located in an optical path **340ₐ** that connects optical ports **INₐ** and **OUTₐ.** OA **160_{b}** of single-pair optical repeater **150** is similarly located in an optical path **340_{b}** that connects optical ports **IN_{b}** and **OUT_{b}.** Single-pair optical repeater **150** also includes a supervisory optical circuit (SOC) **300** that optically couples optical paths **340ₐ** and **340_{b}** as described in more detail below. Example embodiments of circuit **300** are described in reference to FIGs. 6-7.

Single-pair optical repeater **150** uses optical couplers **302, 304, 306,** and **308** and the sets of optical pathways **312, 314, 316,** and **318** to couple circuit **300** to optical paths **340ₐ** and **340_{b}.** Optical couplers **302** and **304** are located at the input and output, respectively, of OA **160ₐ.** Optical couplers **306** and **308** are similarly located at the input and output, respectively, of OA **160_{b}.** In various embodiments, each of the sets **312, 314, 316,** and **318** may have a single respective optical pathway or two or more respective optical pathways, e.g., as illustrated in FIGs. 6-7. Each of such optical pathways of the sets **312, 314, 316,** and **318** can be implemented, e.g., using an optical fiber, an optical waveguide, or a suitable combination thereof.

In an example embodiment, circuit **300** can be a planar lightwave circuit or a part of a planar lightwave circuit.

In operation, circuit **300** provides loop-back paths for the supervisory optical signals of carrier wavelengths λ₁ and λ₂. Said loop-back paths may incorporate NBPOFs corresponding to the wavelengths λ₁ and λ₂, e.g., as illustrated in FIGs. 6-7. Circuit **300** also provides (i) an optical pathway for the backscattered light to cross from optical path **340ₐ** to optical path **340_{b}** and (ii) an optical pathway for the backscattered light to cross from optical path **340_{b}** to optical path **340ₐ,** both of these optical pathways being configured to bypass the NBPOFs corresponding to the wavelengths λ₁ and λ₂, e.g., as further illustrated in FIGs. 6-7. As such, the backscattered light directed through the latter optical pathways can be of any suitable wavelength, e.g., have one of carrier wavelengths λ₃-λₙ or any out-of-band wavelength, such as a wavelength corresponding to a different telecom band than that of wavelengths λ₁-λₙ.

As known in the pertinent art, the backscattered light can be generated in wet plant **104** through a number of physical mechanisms, such as (i) a catastrophic defect in the optical fiber; (ii) a relatively large temperature gradient along the length of the optical fiber; (iii) a non-catastrophic defect that might be caused by sheering, stressing, shaking, and/or excessive bending of the optical fiber; etc.

Circuit **300** is symmetrical in the sense that it enables the input/output port pairs **(INₐ, OUTₐ)** and **(IN_{b}, OUT_{b})** to be interchangeable and functionally equivalent with respect to wavelengths λ₁-λₙ and with respect to at least some out-of-band wavelengths. This symmetry can advantageously be used, e.g., to improve the installation process directed at installing single-pair optical repeaters **150** in wet plant **104.** For example, a single directional orientation of single-pair optical repeaters **150** does not need to be maintained throughout wet plant **104,** which can significantly reduce the risk and/or cost of installation errors.

FIG. 4 shows a block diagram of a series **400** of single-pair optical repeaters **150** that can be used to implement a portion of wet plant **104** according to an embodiment. Series **400** has consecutive serially connected single-pair optical repeaters **150ⱼ, 150ⱼ₊₁,** and **150ⱼ₊₂,** each of which is nominally identical to the single-pair optical repeater **150** of FIG. 3. Note that the single-pair optical repeaters **150** in series **400** are all connected in the same directional orientation. That is: each of the optical fibers **140ⱼₐ, 140₍ⱼ₊₁₎ₐ, 140₍ⱼ₊₂₎ₐ,** and **140₍ⱼ₊₃₎ₐ** is directly connected only to an optical port **INₐ** and/or an optical port **OUTₐ** of single-pair optical repeaters **150ⱼ, 150ⱼ₊₁,** and **150ⱼ₊₂;** and each of the optical fibers **140_{jb}, 140_{(j+1)b}, 140_{(j+2)b},** and **140_{(j+3)b}** is directly connected only to an optical port **IN_{b}** and/or an optical port **OUT_{b}** of single-pair optical repeaters **150ⱼ, 150ⱼ₊₁,** and **150ⱼ₊₂.** As a result, the West-to-East optical path through series **400** goes only through OAs **160ₐ** of single-pair optical repeaters **150ⱼ, 150ⱼ₊₁,** and **150ⱼ₊₂,** whereas the East-to-West optical path through series **400** goes only through OAs **160_{b}** of these single-pair optical repeaters.

FIG. 5 shows a block diagram of a series **500** of single-pair optical repeaters **150** that can be used to implement a portion of wet plant **104** according to another embodiment. Series **500** is generally analogous to series **400** (FIG. 4) and is constructed using the same components. However, series **500** differs from series **400** in that, in series **500,** not all of the single-pair optical repeaters **150** are connected in the same directional orientation. For example, the directional orientation of the single-pair optical repeater **150ⱼ₊₁** in series **500** is flipped with respect to the directional orientation of the same single-pair optical repeater **150ⱼ₊₁** in series **400.**

Due to the orientation flip, single-pair optical fiber **140₍ⱼ₊₁₎ₐ** is directly connected between the output port **OUTₐ** of single-pair optical repeater **150ⱼ** and the input port **IN_{b}** of single-pair optical repeater **150ⱼ₊₁.** Optical fiber **140_{(j+1)b}** is directly connected between the output port **OUTₐ** of single-pair optical repeater **150ⱼ₊₁** and the input port **IN_{b}** of single-pair optical repeater **150ⱼ.** Optical fiber **140₍ⱼ₊₂₎ₐ** is directly connected between the output port **OUT_{b}** of single-pair optical repeater **150ⱼ₊₁** and the input port **INₐ** of single-pair optical repeater **150ⱼ₊₂.** Optical fiber **140_{(j+2)b}** is directly connected between the output port **OUT_{b}** of single-pair optical repeater **150ⱼ₊₂** and the input port **INₐ** of single-pair optical repeater **150ⱼ₊₁.** As a result, the West-to-East optical path through series **500** goes through two OAs **160ₐ** and one OA **160_{b},** whereas the East-to-West optical path through series **500** goes through two OAs **160_{b}** and one OA **160ₐ.**

Typically, conventional optical repeaters need to be installed in the same directional orientation, e.g., in the manner similar to that used in series **400** (FIG. 4), due to certain characteristics (e.g., functional and/or structural asymmetries) of the supervisory optical circuits used therein. In this case, an inadvertent flip of the directional orientation of one or more (but not all) of the optical repeaters, e.g., in the manner producing wet plant portions that resemble series **500** (FIG. 5), can disadvantageously cause a total or partial breakdown in at least some OLM functions of the corresponding communication system. A person of ordinary skill in the art will readily understand that the corresponding remedial measures can be very costly.

In contrast, embodiments of supervisory optical circuit **300** disclosed herein advantageously make it possible to install each of single-pair optical repeaters **150** in wet plant **104** in any of the two possible directional orientations without imposing any adverse effects on the OLM functions of communication system **100.** For example, wet plant **104** can be constructed to have some portions that are similar to series **400** (FIG. 4) and some other portions that are similar to series **500,** while being able to fully support the intended OLM functions of the corresponding communication system **100.** In some embodiments, wet plant **104** can be constructed to have any number L₁ of single-pair optical repeaters **150** installed in one directional orientation and the corresponding number L₂ of single-pair optical repeaters **150** installed in the relatively flipped directional orientation, where L₁+L₂=L, and L₁ and L₂ are both positive integers (also see FIG. 1). In some embodiments, wet plant **104** can be constructed without any specific requirements to the order in which single-pair optical repeaters **150** from the sets L₁ and L₂ are placed within wet plant **104.**

FIG. 6 shows a block diagram of single-pair optical repeater **150** (FIG. 3) that illustrates in more detail an embodiment of the optical supervisory circuit **300.** FIG. 6 uses the same labels as FIG. 3 to mark the same elements.

In the shown embodiment, optical couplers **302** and **306** are nominally identical, with each being implemented using respective instances (nominal copies) of optical couplers **C2, C3,** and **C6.** Optical pathway **312** is connected between the optical coupler **C6** of optical coupler **302** and an NBPOF **610.** Optical pathway **316** is similarly connected between the optical coupler **C6** of optical coupler **306** and the NBPOF **610.** The transfer function **202** of the NBPOF **610** has the center frequency f_{c} corresponding to wavelength λ₁ (also see FIG. 2A).

Optical couplers **304** and **308** are also nominally identical, with each being implemented using respective instances of optical couplers **C4, C5,** and **C6.** In this case, each of the corresponding optical-pathway sets **314** and **318** (also see FIG. 3) includes two respective optical pathways. More specifically, the optical-pathway set **314** includes an optical pathway **614** and a corresponding portion of an optical pathway **630.** The optical-pathway set **318** similarly includes an optical pathway **618** and another portion of optical pathway **630.** Optical pathway **630** is connected between the optical couplers **C4** of optical couplers **304** and **308.** Optical pathway **614** is connected between the optical coupler **C6** of optical coupler **304** and an NBPOF **620.** Optical pathway **618** is similarly connected between the optical coupler **C6** of optical coupler **308** and the NBPOF **620.** The transfer function **202** of the NBPOF **620** has the center frequency f_{c} corresponding to wavelength λ₂ (also see FIG. 2A).

Inspection of the structures of circuit **300** and optical couplers **302, 304, 306,** and **308** shown in FIG. 6 reveals the following structural/functional features.

NBPOF **610** can be traversed by supervisory optical signals of carrier wavelength λ₁ in both directions and can be used to monitor the respective input powers (Pᵢₙ) of OAs **160ₐ** and **160_{b}.** NBPOF **620** can similarly be traversed by supervisory optical signals of carrier wavelength λ₂ in both directions and can be used to monitor the respective output powers (Pₒᵤₜ) of OAs **160ₐ** and **160_{b}.** Optical pathway **630** can be used to transmit backscattered light in both directions.

A portion of a supervisory optical signal of carrier wavelength λ₁ received at the input port **INₐ** can be looped back to output port **OUT_{b},** e.g., as follows. Optical path **340ₐ** directs the optical signal received through input port **INₐ** to optical coupler **302,** where a portion thereof is coupled into optical pathway **312** by way of optical couplers **C2** and **C6.** Optical pathway **312** operates to direct the coupled optical signal through NBPOF **610** that passes the λ₁ component thereof and essentially stops all other spectral components thereof. Optical pathway **316** then directs the filtered λ₁ component to optical coupler **306,** which operates to apply said component, by way of optical couplers **C6** and **C3,** to the input of OA **160_{b}.** OA **160_{b}** operates to amplify the received λ₁ component, and optical path **340_{b}** directs the resulting amplified λ₁ component from the output of OA **160_{b},** through optical couplers **C4** and **C5** of optical coupler **308,** to output port **OUT_{b}.**

A portion of a supervisory optical signal of carrier wavelength λ₁ received at the input port **IN_{b}** can be looped back to output port **OUTₐ,** e.g., as follows. Optical path **340_{b}** directs the optical signal received through input port **IN_{b}** to optical coupler **306,** where a portion thereof is coupled into optical pathway **316** by way of optical couplers **C2** and **C6.** Optical pathway **316** operates to direct the coupled optical signal through NBPOF **610** that passes the λ₁ component thereof and essentially stops all other spectral components thereof. Optical pathway **312** then directs the filtered λ₁ component to optical coupler **302,** which operates to apply said component, by way of optical couplers **C6** and **C3,** to the input of OA **160ₐ.** OA **160ₐ** operates to amplify the received λ₁ component, and optical path **340ₐ** directs the resulting amplified λ₁ component from the output of OA **160ₐ,** through optical couplers **C4** and **C5** of optical coupler **304,** to output port **OUTₐ.**

Direct comparison of the two above-described loopback optical paths taken by the supervisory optical signals of carrier wavelength λ₁ reveals that these two loopback optical paths are nominally identical because they include only the same or nominally identical optical components.

In some embodiments, some of the couplers may be replaced by functional equivalents. In some of such embodiments, optical couplers **302** and **304** can differ from each other. Optical couplers **306** and **308** can also differ from each other.

A portion of a supervisory optical signal of carrier wavelength λ₂ received at the input port **INₐ** can be looped back to output port **OUT_{b},** e.g., as follows. Optical path **340ₐ** directs the optical signal received at input port **INₐ,** through optical couplers **C2** and **C3** of optical coupler **302,** to the input of OA **160ₐ.** OA **160ₐ** operates to amplify the received λ₂ component and directs the resulting amplified λ₂ component to optical coupler **304,** where a portion thereof is coupled into optical pathway **614** by way of optical couplers **C4** and **C6.** Optical pathway **614** operates to direct the coupled optical signal through NBPOF **620** that passes the λ₂ component thereof and essentially stops all other spectral components thereof. Optical pathway **618** then directs the filtered λ₂ component to optical coupler **308,** which operates to couple said component, by way of optical couplers **C6** and **C5,** into optical path **340_{b}.** Optical path **340_{b}** then directs the coupled component to output port **OUT_{b}.**

A portion of a supervisory optical signal of carrier wavelength λ₂ received at the input port **IN_{b}** can be looped back to output port **OUTₐ,** e.g., as follows. Optical path **340_{b}** directs the optical signal received at input port **IN_{b},** through optical couplers **C2** and **C3** of optical coupler **302,** to the input of OA **160_{b}.** OA **160_{b}** operates to amplify the received λ₂ component and directs the resulting amplified λ₂ component to optical coupler **308,** where a portion thereof is coupled into optical pathway **618** by way of optical couplers **C4** and **C6.** Optical pathway **618** operates to direct the coupled optical signal through NBPOF **620** that passes the λ₂ component thereof and essentially stops all other spectral components thereof. Optical pathway **614** then directs the filtered λ₂ component to optical coupler **304,** which operates to couple said component, by way of optical couplers C6 and **C5,** into optical path **340ₐ.** Optical path **340ₐ** then directs the coupled component to output port **OUTₐ.**

Direct comparison of the two above-described loopback optical paths taken by the supervisory optical signals of carrier wavelength λ₂ reveals that these two loopback optical paths are nominally identical because they include only the same or nominally identical optical components.

Optical pathway **630** is configured to: (i) provide an optical path for the backscattered light externally received at output port **OUTₐ** to cross from optical path **340ₐ** to optical path **340_{b};** and (ii) provide an optical path for the backscattered light externally received at output port **OUT_{b}** to cross from optical path **340_{b}** to optical path **340ₐ.** As such, optical pathway **630** can be used to direct back to the corresponding one of landing stations **102₁** and **102₂** the backscattered light by way of the optical path having the optical amplifiers **160** that are directionally aligned with the propagation direction of the backscattered light.

A portion of the backscattered light received at output port **OUTₐ** can be directed to output port **OUT_{b},** e.g., as follows. Optical path **340ₐ** operates to direct the backscattered light received at output port **OUTₐ** to optical coupler **304,** where a portion thereof is coupled into optical pathway **630** by way of optical couplers **C5** and **C4.** Optical pathway **630** operates to direct the coupled optical signal to optical coupler **308,** which operates to further couple said optical signal, by way of optical couplers **C4** and **C5,** into optical path **340_{b}.** Optical path **340_{b}** then directs the coupled light to output port **OUT_{b}.**

A portion of the backscattered light received at output port **OUT_{b}** can be directed to output port **OUTₐ,** e.g., as follows. Optical path **340_{b}** operates to direct the backscattered light received at output port **OUT_{b}** to optical coupler **308,** where a portion thereof is coupled into optical pathway **630** by way of optical couplers **C5** and **C4.** Optical pathway **630** operates to direct the coupled optical signal to optical coupler **304,** which operates to further couple said optical signal, by way of optical couplers **C4** and **C5,** into optical path **340ₐ.** Optical path **340ₐ** then directs the coupled light to output port **OUTₐ.**

Direct comparison of the two above-described backscattered-light paths reveals that these two optical paths are nominally identical because they include only the same or nominally identical optical components.

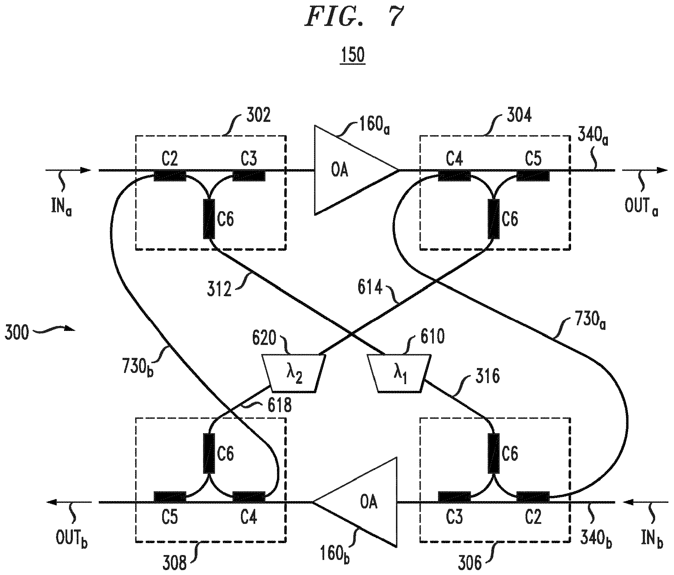

FIG. 7 shows a block diagram of single-pair optical repeater **150** (FIG. 3) that illustrates in more detail another embodiment of the optical supervisory circuit **300.** The embodiment of FIG. 7 can be viewed as a modification of the embodiment of FIG. 6. This modification includes: (i) removing optical pathway **630** (see FIG. 6); and (ii) inserting optical pathways **730ₐ** and **730_{b},** with an appropriate modification of the two optical couplers **C2.** More specifically, optical pathway **730ₐ** is connected between the optical coupler **C4** of optical coupler **304** and the optical coupler **C2** of optical coupler **306.** Optical pathway **730_{b}** is similarly connected between the optical coupler **C4** of optical coupler **308** and the optical coupler **C2** of optical coupler **302.**

Since the loopback optical paths for the supervisory optical signals of carrier wavelength λ₁ and λ₂ are unchanged from the embodiment of FIG. 6, the description of those optical paths given in reference to FIG. 6 is also applicable to the embodiment of FIG. 7, and is not repeated here.

Optical pathway **730ₐ** is configured to provide an optical path for the backscattered light externally received at output port **OUTₐ** to cross from optical path **340ₐ** to optical path **340_{b}.** Optical pathway **730_{b}** is similarly configured to provide an optical path for the backscattered light externally received at output port **OUT_{b}** to cross from optical path **340_{b}** to optical path **340ₐ.**

A portion of the backscattered light received at output port **OUTₐ** can be directed to output port **OUT_{b},** e.g., as follows. Optical path **340ₐ** operates to direct the backscattered light externally received at output port **OUTₐ** to optical coupler **304,** where a portion thereof is coupled into optical pathway **730ₐ** by way of optical couplers **C5** and **C4.** Optical pathway **730ₐ** operates to direct the coupled optical signal to optical coupler **306,** which operates to further couple said optical signal, by way of optical couplers **C2** and **C3,** into optical path **340_{b}.** Optical path **340_{b}** then applies the coupled light to the input of OA **160_{b},** where the latter undergoes optical amplification. The resulting amplified signal is then directed from the output of OA **160_{b},** through the optical couplers **C4** and **C5** of optical coupler **308,** to output port **OUT_{b}.**

A portion of the backscattered light received at output port **OUT_{b}** can be directed to output port **OUTₐ,** e.g., as follows. Optical path **340_{b}** operates to direct the backscattered light externally received at output port **OUT_{b}** to optical coupler **308,** where a portion thereof is coupled into optical pathway **730_{b}** by way of optical couplers **C5** and **C4.** Optical pathway **730_{b}** operates to direct the coupled optical signal to optical coupler **302,** which operates to further couple said optical signal, by way of optical couplers **C2** and **C3,** into optical path **340ₐ.** Optical path **340ₐ** then applies the coupled light to the input of OA **160ₐ,** where the latter undergoes optical amplification. The resulting amplified signal is then directed from the output of OA **160ₐ,** through the optical couplers **C4** and **C5** of optical coupler **304,** to output port **OUTₐ.**

Note that, for both propagation directions, the received backscattered light undergoes optical amplification in the corresponding one of OAs **160ₐ** and **160_{b}.** This feature is present only in the embodiment of FIG. 7. In contrast, in the embodiment of FIG. 6, the received backscattered light is routed to bypass OAs **160ₐ** and **160_{b}.**

Direct comparison of the two above-described backscattered-light paths in the embodiment of FIG. 7 reveals that these two optical paths are nominally identical because they include only the same or nominally identical optical components.

In some embodiments, some or all of the above-described optical pathways through circuit **300** may include respective optical attenuators. All optical components like attenuators, wavelength selective switches, Bragg filters, mirrors, circulators, isolators, and erbium or semiconductor optical amplifiers can be also used in the SOC common optical supervision schemes described below.

As suggested previously, a multi-pair optical repeater that supports the monitoring of multiple pairs of optical paths can be constructed by provisioning multiple instances of the single-pair optical repeater of FIG. 3, where each instance supports the monitoring of a different pair of the optical paths. The following discussion describes alternative embodiments of multi-pair optical repeaters.

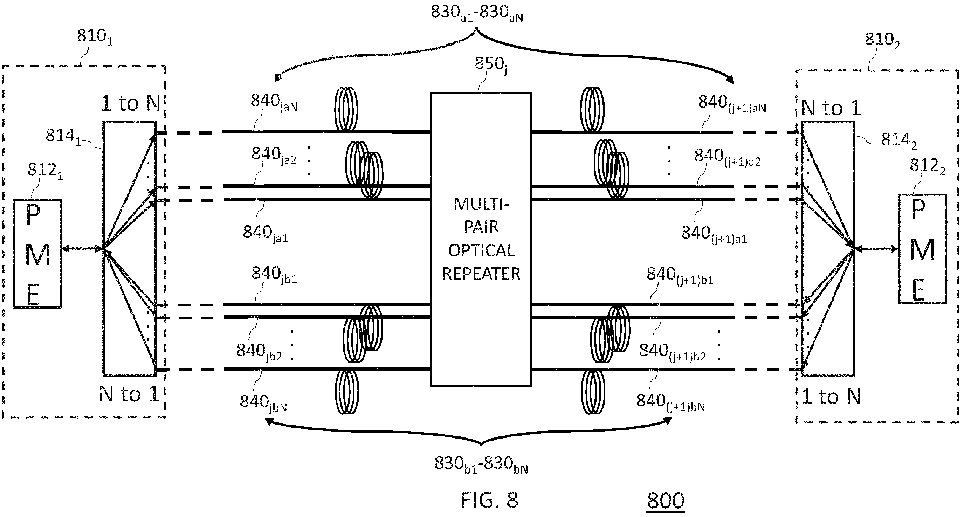

FIG. 8 shows a block diagram of an optical communication system 800 according to an embodiment having two landing stations 810₁ and 810₂ communicating over *N* pairs of unidirectional optical paths 830 with *M* multi-pair optical repeaters 850 supporting those communications, where *N* is an integer greater than one and *M* is a positive integer. The *i*th pair of optical paths includes a first optical path 830ₐᵢ carrying communication signals from landing station 810₁ to landing station 810₂ and a second optical path 830_{bi} carrying communication signals from landing station 810₂ to landing station 810₁ to provide bi-directional communication between the two landing stations. Each multi-pair optical repeater 850 connects two optical fibers 840 of each optical path 830.

FIG. 8 shows the *j*th multi-pair optical repeater 850ⱼ in the communication system 800 which respectively connects 2*N* optical fibers 840ⱼₐ₁-840_{jaN} and 840_{jb1}-840_{jbN} to 2*N* corresponding optical fibers 840₍ⱼ₊₁₎ₐ₁-840_{(j+1)aN} and 840_{(j+1)b1}-840_{(j+1)bN}, where fibers 840ⱼₐ₁ and 840₍ⱼ₊₁)ₐ₁ are part of the first optical path 830ₐ₁ for a first pair of optical paths, and fibers 840_{jb1} and 840_{(j+1)b1} are part of the second optical path 830_{b1} for that first pair of optical paths, and so on until fibers 840_{jaN} and 840_{(j+1)aN} are part of the first optical path 830_{aN} for the *N*th pair of optical paths, and fibers 840_{jbN} and 840_{(j+1)bN} are part of the second optical path 830_{bN} for that *N*th pair of optical paths.

As described further below, in addition to amplifying the received communication signals, each multi-pair optical repeater 850 supports monitoring signals (e.g., supervisory and/or OTDR signals) transmitted and received by the landing stations 810₁ and 810₂ to monitor all *N* pairs of optical paths 830. In addition to other elements not shown in FIG. 8 such as instances of the line terminal equipment 110, the MUX 130, and the DMUX 136 shown in FIG. 1 for each different pair of the optical paths 830 in FIG. 8, each landing station 810 includes, for all *N* pairs of the optical paths 830 in FIG. 8, a single instance of passive monitor equipment (PME) 812 and a single instance of a multiplexer/demultiplexer (MUX/DMUX) 814. The PME 812₁ in the first landing station 810₂ can generate outgoing monitoring signals that are distributed by the MUX/DMUX 814₁ to the *N* first optical paths 830ₐ₁-830_{aN}, the PME 812₂ in the second landing station 810₂ can generate outgoing monitoring signals that are distributed by the MUX/DMUX 814₂ to the *N* second optical paths 830_{b1}-830_{bN}. The MUX/DMUX 814i also provides incoming monitoring signals received from the *N* second optical paths 830_{b1}-830_{bN} for processing by the MPE 812₁, and the MUX/DMUX 814₂ also provides incoming monitoring signals received from the N first optical paths 830ₐ₁-830_{aN} for processing by the PME 812₂.

Note that (i) the *N* optical fibers 840_{1b1}-840_{1bN} between the first landing station 810₁ and the first multi-pair optical repeater 850₁ and (ii) the *N* optical fibers 840_{(M+1)a1}-840_{(M+1)aN} between the last multi-pair optical repeater 850_{M} and the second landing station 810₂ are not monitored by the monitoring signals. As such, typical practice is for (i) the 2*N* optical fibers 840 between the first landing station 810₁ and the first multi-pair optical repeater 850₁ and (i) the 2*N* optical fibers 840 between the last multi-pair optical repeater 850_{M} and the second landing station 810₂ to be relatively short compared to other optical fibers 840 in the communication system 800.

As described further below, the optical paths 830 are monitored sequentially, for example, by the first landing station 810₁ sequentially generating, transmitting, receiving, and processing monitoring signals first for the first optical path 830ₐ₁ of the first pair, then for the first optical path 830ₐ₂ of the second pair, and so on to the first optical path 830_{aN} of the *N*th pair, followed by the second landing station 810₂ sequentially generating, transmitting, receiving, and processing monitoring signals for the second optical path 830_{b1} of the first pair, then for the second optical path 830_{b2} of the second pair, and so on to the second optical path 830_{bN} of the Nth pair.

In particular, for a first phase of monitoring, the PME 812₁ of the first landing station 810₁ is configured to generate outgoing monitoring signals for monitoring the first optical path 830ₐ₁ of the first pair, the upper, demultiplexer portion of MUX/DMUX 814₁ of the first landing station 810₁ is configured to route those outgoing monitoring signals to the first optical path 830ₐ₁ of the first pair, and the lower, multiplexer portion of MUX/DMUX 814₁ is configured to route corresponding, incoming monitoring signals received from the second optical path 830_{b1} of the first pair to the PME 812₁ for processing.

For a second phase of monitoring, the PME 812₁ is configured to generate monitoring signals for monitoring the first optical path 830ₐ₂ of the second pair, MUX/DMUX 814₁ is configured to route the outgoing monitoring signals to the first optical path 830ₐ₂ of the second pair, and MUX/DMUX 814₁ is configured to route corresponding, incoming monitoring signals received from the second optical path 830_{b2} of the second pair to the PME 812₁ for processing. And so on until an analogous *N*th phase of monitoring in which the PME 812₁ is configured to generate monitoring signals for monitoring the first optical path 830_{aN} of the Nth pair, MUX/DMUX 814₁ is configured to route the outgoing monitoring signals to the first optical path 830_{aN} of the Nth pair, and MUX/DMUX 814₁ is configured to route corresponding, incoming monitoring signals received from the second optical path 830_{bN} of the Nth pair to the PME 812₁ for processing.

Analogous processing can then be performed to monitor the *N* second optical paths 830_{b1}-830_{bN} by the second landing station 810₂ sequentially generating and transmitting outgoing monitoring signals over the *N* second optical paths 830_{b1}-830_{bN} and receiving and processing corresponding, incoming monitoring signals received from the *N* first optical paths 830ₐ₁-830_{aN}.

This sequential monitoring processing can be repeated over and over again to repeatedly monitor all *N* pairs of optical paths 830. Those skilled in the art will understand that the optical paths 830 can be monitored in other suitable sequences including interleaving the monitoring of the *N* first optical paths 830ₐ₁-830_{aN} with the monitoring of the *N* second optical paths 830_{b1}-830_{bN}.

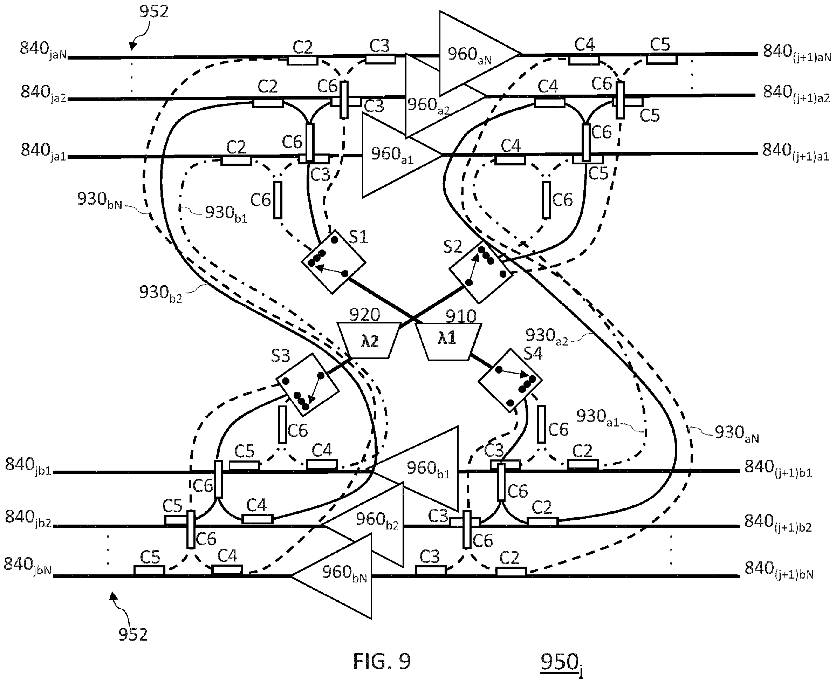

FIG. 9 is a block diagram of a multi-pair optical repeater 950ⱼ that can be used to implement the multi-pair optical repeater 850ⱼ of the communication system 800 of FIG. 8. As shown in FIG. 9, the repeater 950ⱼ has 2*N* optical pathways 952 that connect to the 4*N* optical fibers 840ⱼₐ₁- 840_{jaN}, 840₍ⱼ₊₁₎ₐ₁- 840_{(j+1)aN}, 840_{jb1}- 840_{jbN}, and 840_{(j+1)b1}- 840_{(j+1)bN} of the *N* pairs of the optical paths 830 of FIG. 8. The multi-pair optical repeater 950ⱼ is based on the topology of the single-pair optical repeater 150 of FIG. 7 and is analogous to *N* instances of that single-pair optical repeater 150, one instance for each of the *N* different pairs of optical paths 830 in FIG. 8, except that those *N* instances share a common set of two filters 910 and 920, which are similar to the two filters 610 and 620 of FIG. 7. Like the single-pair optical repeater 150 of FIG. 7, the ith instance in the multi-pair optical repeater 950ⱼ of FIG. 9 has two (erbium or semiconductor) optical amplifiers 960ₐᵢ and 960_{bi}, four sets of three couplers, labeled C2-C6 as in FIG. 7, and two OTDR pathways 930ₐᵢ and 930_{bi}. To enable the filters 910 and 920 to be shared by all *N* pairs of optical paths 830 in FIG. 8, the multi-pair optical repeater 950ⱼ has four 1xN switches S1-S4 that are actively controlled (by electronics not shown in FIG. 9) to selectively route signals between the filters 910 and 920 and the optical fibers 840, where each 1xN switch has one unswitched port and N switched ports.

In particular, to enable the multi-pair optical repeater 950ⱼ to participate in the monitoring of the first optical path 830ₐ₁ by the first landing station 810₁, each of the switches S1-S4 in FIG. 9 is configured to select the first of its *N* switched ports. As such, the multi-pair optical repeater 950ⱼ will operate analogous to an instance of the single-pair optical repeater 150 of FIG. 7 configured to the first pair of optical paths 830ₐ₁ and 830_{b1}. Note that this same configuration of the switches S1-S4 will enable the multi-pair optical repeater 950ⱼ to participate in the monitoring of the second optical path 830_{b1} by the second landing station 810₂.

Similarly, to enable the multi-pair optical repeater 950ⱼ to participate in the monitoring (i) by the first landing station 810₁ of the first optical path 830ₐ₂ and/or (ii) by the second landing station 810₂ of the second optical path 830_{b2}, each of the switches S1-S4 is configured to select the second of its N switched ports. In this case, the multi-pair optical repeater 950ⱼ will operate analogous to an instance of the single-pair optical repeater 150 of FIG. 7 configured to the second pair of optical paths 830ₐ₂ and 830_{b2}.

And so on to enable the multi-pair optical repeater 950ⱼ to participate in the monitoring of all *N* pairs of the optical paths 830 in FIG. 8, one optical path at a time.

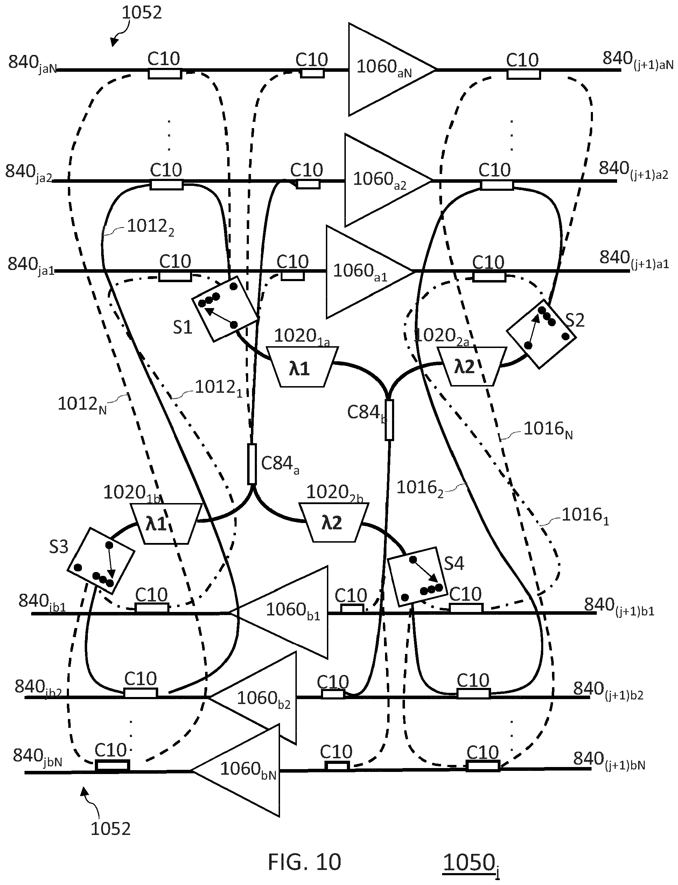

FIG. 10 is a block diagram of another multi-pair optical repeater 1050ⱼ that can be used to implement the multi-pair optical repeater 850ⱼ of the communication system 800 of FIG. 8. As shown in FIG. 10, the repeater 1050ⱼ has 2N optical paths 1052 that connect to the 4*N* optical fibers 840ⱼₐ₁- 840_{jaN}, 840₍ⱼ₊₁₎ₐ₁- 840_{(j+1)aN}, 840_{jb1}- 840_{jbN}, and 840_{(j+1)b1}-840_{(j+1)bN} of the *N* pairs of optical paths 830 of FIG. 8. The multi-pair optical repeater 1050ⱼ is based on the topology of the single-pair optical repeater 150ⱼ of FIG. 3 of EP Patent No. 3599726 ("EP FIG. 3") and is analogous to N instances of that single-pair optical repeater 150ⱼ, one instance for each of the N different pairs of optical paths 830 in FIG. 8, except that those N instances share a common set of four filters 1020₁ₐ, 1020_{1b}, 1020₂ₐ, and 1020_{2b}, which are similar to the four filters 320₁ₐ, 320_{1b}, 320₂ₐ, and 320_{2b} of EP FIG. 3. Like the single-pair optical repeater 150ⱼ of EP FIG. 3, the ith instance in the multi-pair optical repeater 1050ⱼ of FIG. 10 has two (erbium or semiconductor) optical amplifiers 1060ₐᵢ and 1060_{bi}, six line couplers C10, and two OTDR pathways 1012ᵢ and 1016i. To enable the filters 1020₁ₐ, 1020_{1b}, 1020₂ₐ, and 1020_{2b} to be shared by all *N* pairs of optical paths 830 in FIG. 8, the multi-pair optical repeater 1050ⱼ has four 1xN switches S1-S4 that are actively controlled (by electronics not shown in FIG. 10) to selectively route signals between the filters 1020₁ₐ, 1020_{1b}, 1020₂ₐ, and 1020_{2b} and the optical fibers 840.

In particular, to enable the multi-pair optical repeater 1050ⱼ to participate in the monitoring by the first landing station 810₁ of the first optical path 830ₐ₁, each of the switches S1-S4 is configured to select the first of its N switched ports. As such, the multi-pair optical repeater 1050ⱼ will operate analogous to an instance of the single-pair optical repeater 150ⱼ of EP FIG. 3 configured to the first pair of optical paths 830ₐ₁ and 830_{b1} of FIG. 8. Note that this same configuration of the switches S1-S4 will enable the multi-pair optical repeater 1050ⱼ to participate in the monitoring by the second landing station 810₂ of the second optical path 830_{b1}.

Similarly, to enable the multi-pair optical repeater 1050ⱼ to participate in the monitoring (i) by the first landing station 810₁ of the first optical path 830ₐ₂ and/or (ii) by the second landing station 810₂ of the second optical path 830_{b2}, each of the switches S1-S4 is configured to select the second of its N switched ports. In this case, the multi-pair optical repeater 1050ⱼ will operate analogous to an instance of the single-pair optical repeater 150ⱼ of EP FIG. 3 configured to the second pair of optical paths 830ₐ₂ and 830_{b2}.

And so on to enable the multi-pair optical repeater 1050ⱼ to participate in the monitoring of all *N* pairs of the optical paths 830 in FIG. 8, one optical path at a time.

Note that, instead of using 1xN active switches S1-S4, in alternative embodiments, the multi-pair optical repeater 950ⱼ of FIG. 9 and/or the multi-pair optical repeater 1050ⱼ of FIG. 10 can be implemented using 1xN passive couplers.

Although embodiments of the multi-pair optical repeater 850ⱼ of FIG. 8 have been described in the context of (i) the multi-pair optical repeater 950ⱼ of FIG. 9, which is based on the specific topology of the single-pair optical repeater 150 of FIG. 7, and (ii) the multi-pair optical repeater 1050ⱼ of FIG. 10, which is based on the specific topology of the single-pair optical repeater 150ⱼ of EP FIG. 3, those skilled in the art will understand that the topology of any suitable single-pair optical repeater can be used to implement an embodiment of the multi-pair optical repeater 850ⱼ of FIG. 8, such as (without limitation) the other single-pair optical repeaters described in European Patents EP3404855, EP3404852, EP3599726 and EP3696997.

The embodiments of FIGs. 9 and 10 rely on extrinsic devices, such as active switches and passive couplers, to selectively route monitoring signals between different optical paths, e.g., between optical paths 830ₐᵢ and 830_{bi}. The following embodiments rely on intrinsic coupling between optical paths to achieve an analogous result.

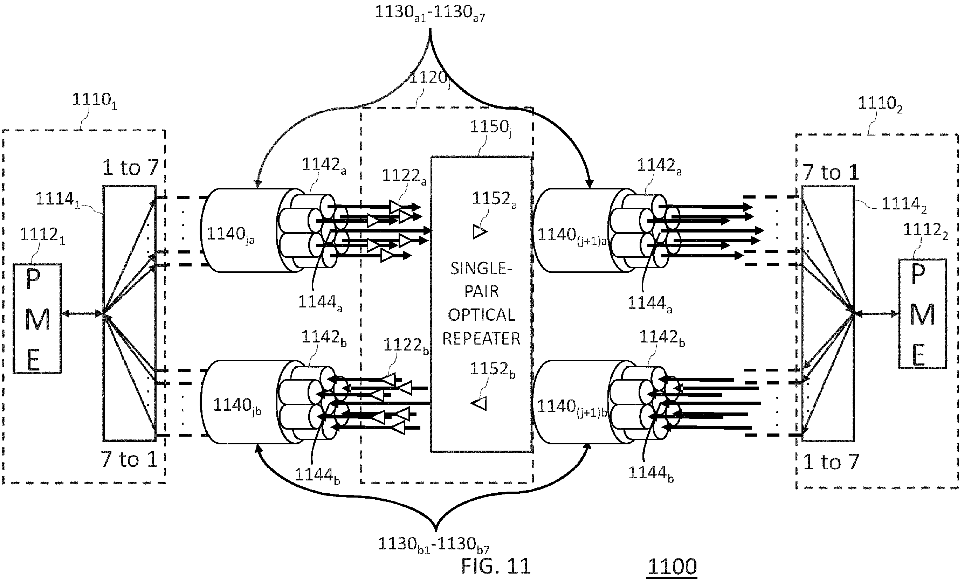

FIG. 11 shows a block diagram of an optical communication system 1100 according to an embodiment having two landing stations 1110₁ and 1110₂ communicating over seven pairs of unidirectional optical paths 1130ₐ₁-1130ₐ₇ and 1130_{b1}-1130_{b7} with M optical repeater sub-systems 1120 supporting those communications, where *M* is a positive integer. The seven first optical paths 1130ₐ₁-1130ₐ₇ comprise (M+1) multi-fiber cables 1140₁ₐ-1140_{(M+1)a} connected to carry communication signals from landing station 1110₁ to landing station 1110₂, and the seven second optical paths 1130_{b1}-1130_{b7} comprise (M+1) multi-fiber cables 1140_{1b}-1140_{(M+1)b} connected to carry communication signals from landing station 1110₂ to landing station 1110₁. Each multi-fiber cable 1140 has (i) six outer optical fibers 1142 corresponding to either the six outer first optical paths 1130ₐ₁-1130ₐ₆ or to the six outer second optical paths 1130_{b1}-1130_{b6} and (ii) one center optical fiber 1144 corresponding to either the inner first optical path 1130ₐ₇ or to the inner second optical path 1130_{b7}. The landing stations 1110₁ and 1110₂ are analogous to the landing stations 810₁ and 810₂ of FIG. 8 with analogously labeled PMEs and MUX/DMUXes.

FIG. 11 shows the *j*th optical repeater sub-system 1120ⱼ in the communication system 1100 which respectively (i) connects the six outer fibers 1142ₐ and one center fiber 1144ₐ of cable 1140ⱼₐ to the six outer fibers 1142ₐ and one center fiber 1144ₐ of cable 1140₍ⱼ₊₁₎ₐ and (ii) connects the six outer fibers 1142_{b} and one center fiber 1144_{b} of cable 1140_{(j+1)b} to the six outer fibers 1142_{b} and one center fiber 1144_{b} of cable 1140_{jb}. As shown in FIG. 11, the optical repeater sub-system 1120ⱼ has (i) six (erbium or semiconductor) optical amplifiers 1122ₐ for the six outer fibers 1142ₐ carrying signals from landing station 1110₁ to landing station 1110z and (ii) six (erbium or semiconductor) optical amplifiers 1122_{b} for the six outer fibers 1142_{b} carrying signals from landing station 1110z to landing station 1110₁. In addition, the optical repeater sub-system 1120ⱼ has a single instance of a single-pair optical repeater 1150ⱼ connected to the center fibers 1144ₐ of the cables 1140ⱼₐ and 1140₍ⱼ₊₁₎ₐ and the center fibers 1144_{b} of the cables 1140_{jb} and 1140_{(j+1)b}.

The single-pair optical repeater 1150ⱼ may be implemented using any suitable single-pair optical repeater, such as (without limitation) the single-pair optical repeater 150 of FIG. 6, the single-pair optical repeater 150 of FIG. 7, the single-pair optical repeater 150ⱼ of EP FIG. 3, or any of the other single-pair optical repeaters described in any of European Patents EP3404855, EP3404852, EP3599726 and EP3696997. As represented in FIG. 11, the single-pair optical repeater 1150ⱼ has an upper optical amplifier 1152ₐ for the center fibers 1144ₐ and a lower optical amplifier 1152_{b} for the center fibers 1144_{b}.

For bidirectional communication, the landing station 1110₁ transmits communication signals to the landing station 1110₂ using one or more or all of the optical fibers 1142ₐ and 1144ₐ of the multi-fiber cables 1140ₐ of the seven first optical paths 1130ₐ₁-1130ₐ₇, where the optical amplifiers 1122ₐ and 1152ₐ in the optical repeater sub-systems 1120 amplify those communication signals. Similarly and possibly concurrently, the landing station 1110₂ transmits communication signals to the landing station 1110₁ using one or more or all of the optical fibers 1142_{b} and 1144_{b} of the multi-fiber cables 1140_{b} of the seven second optical paths 1130_{b1}-1130_{b7}, where the optical amplifiers 1122_{b} and 1152_{b} in the optical repeater sub-systems 1120 amplify those communication signals.

With the single-pair optical repeater 1150 of each optical repeater sub-system 1120 connected to the corresponding center fibers 1144ₐ and 1144_{b}, the first landing station 1110₁ can monitor the center fibers 1144ₐ in the seventh first optical path 1130ₐ₇ (except for the last center fiber 1144ₐ connecting the Mth optical repeater sub-system 1120_{M} to the second landing station 1110₂) by transmitting appropriate outgoing monitoring signals (i.e., supervisory and/or OTDR signals) into the center fibers 1144ₐ with corresponding incoming monitoring signals transmitted back to the first landing station 1110₁ via the center fibers 1144_{b} of the seventh second optical path 1130_{b7}, and the second landing station 1110₂ can monitor the center fibers 1144_{b} in the seventh second optical path 1130_{b7} (except for the first center fiber 1144ₐ connecting the first landing station 1110₁ to the first optical repeater sub-system 1120₁) by transmitting appropriate outgoing monitoring signals into the center fibers 1144_{b} with corresponding incoming monitoring signals transmitted back to the second landing station 1110₂ via the center fibers 1144ₐ of the seventh first optical path 1130ₐ₇.

In order to monitor the twelve individual outer fibers 1142 in the first and second optical paths 1130ₐ₁-1130ₐ₆ and 1130_{b1}-1130_{b6}, the communication system 1100 of FIG. 11 relies on the phenomenon of intrinsic fiber-to-fiber coupling in which an optical signal propagating along one optical fiber induces analogous optical signals propagating in both directions along an adjacent optical fiber. Relying on this phenomenon, the first landing station 1110₁ can transmit an outgoing monitoring signal into any selected one of the six outer fibers 1142ₐ of the six first optical paths 1130ₐ₁-1130ₐ₆ such that fiber-to-fiber coupling will induce a version of the outgoing monitoring signal into the center fibers 1144ₐ of the seventh first optical path 1130ₐ₇. At the optical repeater sub-system 1120ⱼ of FIG. 11, the induced signal in the corresponding center fiber 1144ₐ of the cable 1140ⱼₐ will be applied to the single-pair optical repeater 1150ⱼ and a corresponding incoming monitoring signal will be transmitted back to the first landing station 1110₁ via the center fibers 1144_{b} of the seventh second optical path 1130_{b7}. In this way, the first landing station 1110₁ can sequentially monitor each of the six outer fibers 1142ₐ of the six first optical paths 1130ₐ₁-1130ₐ₆, one at a time.

Similarly, the second landing station 1110₂ can transmit an outgoing monitoring signal into any selected one of the six outer fibers 1142_{b} of the six second optical paths 1130_{b1}-1130_{b6} such that fiber-to-fiber coupling will induce a version of the outgoing monitoring signal into the center fibers 1144_{b} of the seventh second optical path 1130_{b7}. At the optical repeater sub-system 1120ⱼ of FIG. 11, the induced signal in the corresponding center fiber 1144_{b} of the cable 1140_{(j+1)b} will be applied to the single-pair optical repeater 1150ⱼ and a corresponding incoming monitoring signal will be transmitted back to the second landing station 1110₂ via the center fibers 1144ₐ of the seventh first optical path 1130ₐ₇. In this way, the first landing station 1110₁ can sequentially monitor each of the six outer fibers 1142_{b} of six second optical paths 1130_{b1}-1130_{b6}, one at a time.

Thus, the fourteen optical paths 1130ₐ₁-1130ₐ₇ and 1130_{b1}-1130_{b7} in the communication system 1100 can be sequentially monitored, one path at a time. Note that the first landing station 1110₁ can monitor any one of the first optical paths 1130ₐᵢ using one of the two supervisory wavelengths (e.g., λ₁) at the same time that the second landing station 1110₂ is monitoring any one of the second optical paths 1130_{bk} using the other supervisory wavelength (e.g., λ₂). In addition, the first landing station 1110₁ can simultaneously perform both (i) supervisory monitoring of any one of the first optical paths 1130ₐᵢ using one of the two supervisory wavelengths and (ii) OTDR monitoring of any one of the other first optical paths 1130ₐₖ using the other supervisory wavelength. And, likewise, for the second landing station 1110₂, albeit not at the same time and the first landing station 1110₁.

When, for example, the first landing station 1110₁ transmits a monitoring signal along one of the outer fibers 1142ₐ, in addition to inducing a corresponding signal traveling in the same direction along the adjacent center fiber 1144ₐ, corresponding signals traveling in the same direction will also be induced in the two adjacent outer fibers 1142ₐ, which induced signals will be amplified and propagated to the second landing station 1110₂. In addition, corresponding signals traveling in the opposite direction will also be induced in those two adjacent outer fibers 1142ₐ and in the center fiber 1144ₐ. However, since the amplifiers 1122ₐ and 1152ₐ for those fibers 1142ₐ and 1144ₐ are configured in the other direction, those induced signals will not be amplified for propagation back to the first landing station 1110₁, although, in theory, whatever induced signals do reach the first landing station 1110₁ could be used to monitor at least the first multi-fiber cable 1140₁ₐ. And likewise for monitoring signals transmitted by the second landing station 810₂ and the last multi-fiber cable 1140_{(M+1)b}.

Note that the first landing station 1110₁ can perform simultaneous OTDR monitoring of all seven first optical paths 1130ₐ₁-1130ₐ₂ (or any subset of those first optical paths) by transmitting an OTDR signal in each optical path 1130ai, where each OTDR signal has a different wavelength. In that case, all seven OTDR signals will be simultaneously returned to the first landing station 1110₁ via the second optical path 1130_{b7} corresponding to the center fibers 1144_{b}. At the same time, the second landing station 1110₂ can perform OTDR monitoring of up to all seven second optical paths 1130_{b1}-1130_{b7} using a uniquely different set of different wavelengths.

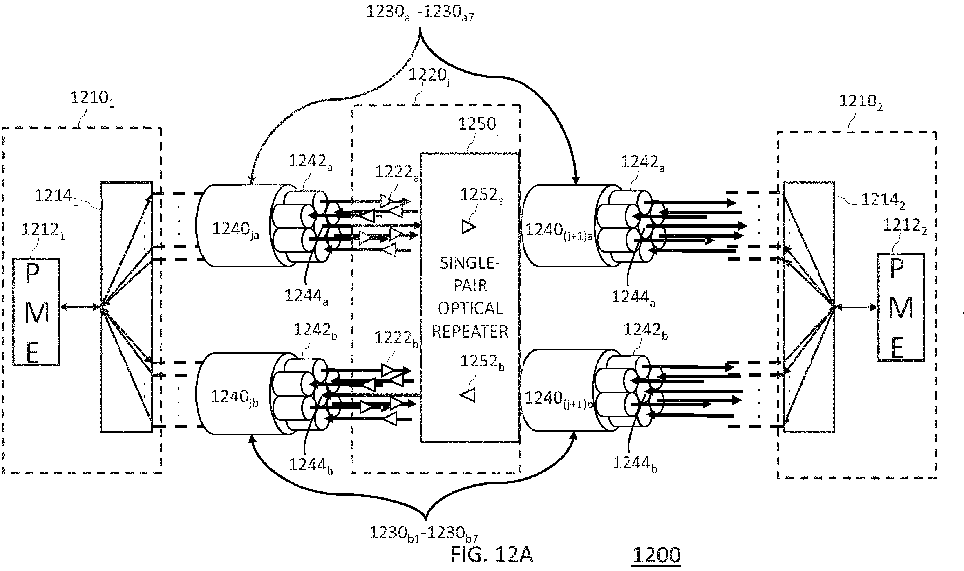

FIG. 12A shows a block diagram of an optical communication system 1200 according to an embodiment having two landing stations 1210₁ and 1210₂ communicating over seven pairs of unidirectional optical paths 1230ₐ₁-1230ₐ₇ and 1230_{b1}-1230_{b7} with M optical repeater sub-systems 1220 supporting those communications, where *M* is a positive integer. Communication system 1200 is analogous to communication system 1100 of FIG. 11 with similar elements having similar labels, except that three of the optical amplifiers 1222 in the optical repeater sub-systems 1220 are configured to amplify signals in three of the six outer fibers 1242 of each multi-fiber cable 1240 in the opposite direction, such that the multi-fiber cables 1240 are bidirectional.

Because of the bidirectional configuration of the optical amplifiers 1222 in each optical repeater sub-system 1220, the single-pair optical repeaters 1250 in the communication system 1200 are able to support monitoring of the center fibers 1244 in the inner optical paths 1230ₐ₇ and 1230_{b7}, but the outer fibers 1242 in only three of the six outer optical paths 1230ₐ₁-1230ₐ₆ and 1230_{b1}-1230_{b6}. However, as described below, because each multi-fiber cable 1240 is bidirectional, the optical amplifiers 1222 in the optical repeater sub-systems 1220 are able to support OTDR monitoring of the three other outer fibers 1242 without relying on the single-pair optical repeaters 1250.

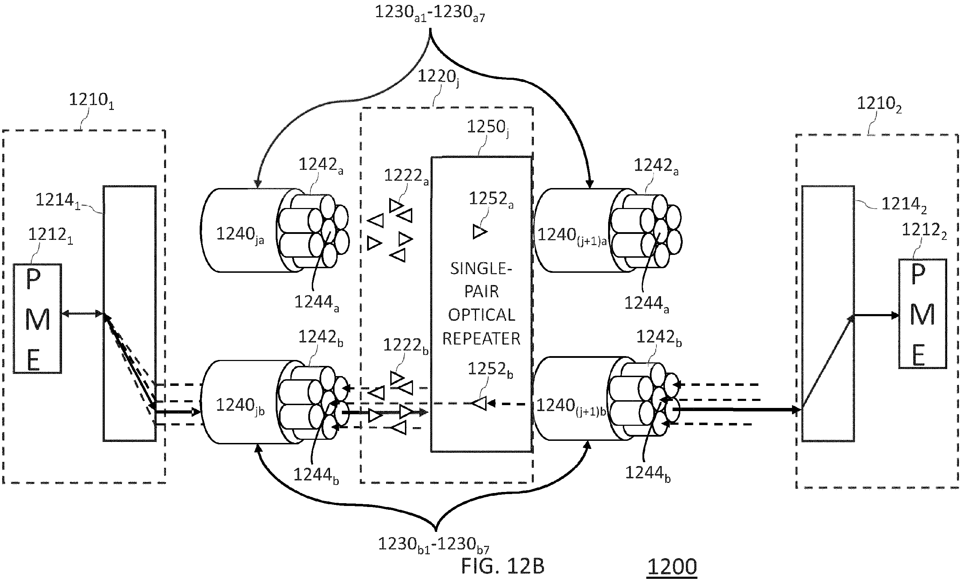

FIG. 12B shows a block diagram of the optical communication system 1200 of FIG. 12A representing the OTDR monitoring of one of the six outer fibers 1242 (i.e., three in each direction) that cannot be monitored using the single-pair optical repeaters 1250. In particular, as shown in FIG. 12B, the first landing station 1210₁ transmits an outgoing OTDR monitoring signal into a selected outer fiber 1242_{b} (represented by solid arrows) and corresponding incoming OTDR signals are induced in the center fiber 1244_{b} and the two adjacent outer fibers 1242_{b} in the opposite direction (represented by broken arrows) for amplification and propagation back to the first landing station 1210₁. In this way, the first landing station 1210₁ can perform OTDR monitoring of that selected outer fiber 1242_{b}.

In a similar manner, the first landing station 1210₁ can sequentially perform OTDR monitoring of the two other outer fibers 1242_{b} that cannot be monitored using the single-pair optical repeaters 1250, and the second landing station 1210₂ can sequentially perform OTDR monitoring of the three outer fibers 1242ₐ that cannot be monitored using the single-pair optical repeaters 1250.

Note that OTDR monitoring of an outer fiber 1242ₐ can be performed at the same time as OTDR monitoring of an outer fiber 1242_{b}. Furthermore, OTDR monitoring of an outer fiber 1242ₐ can be performed at the same time as supervisory and/or OTDR monitoring of the center fiber 1244_{b} or one of the three outer fibers 1242_{b} that can be monitored using the single-pair optical repeaters 1250. And vice versa for OTDR monitoring of an outer fiber 1242_{b}.

By using the single-pair optical repeaters 1250 to provide supervisory and/or OTDR monitoring of the two center fibers 1244 and six of the twelve outer fibers 1242 and by using the technique illustrated in FIG. 12B to provide OTDR monitoring of the other six outer fibers 1242, the optical communication system 1200 is able to provide at least some level of monitoring for all fourteen optical paths 1230ₐ₁-1230ₐ₇ and 1230_{b1}-1230_{b7} in the system. The single-pair optical repeaters 1250 can use or combine different technologies to couple, switch, and/or filter the supervisory and/or OTDR signals

Although the OTDR monitoring technique illustrated in FIG. 12B involves the transmission of an OTDR signal in an outer fiber 1242, it will be understood that, in other implementations, analogous OTDR monitoring can be achieved by transmitting an OTDR signal in the center fiber 1244. In that case, since the center fiber 1244 is adjacent to all six outer fibers 1242, induced signals will be transmitted back to the originating landing station 810 on the three adjacent outer fibers 1242 configured to transmit signals in the direction opposite to that of the center fiber 1244.

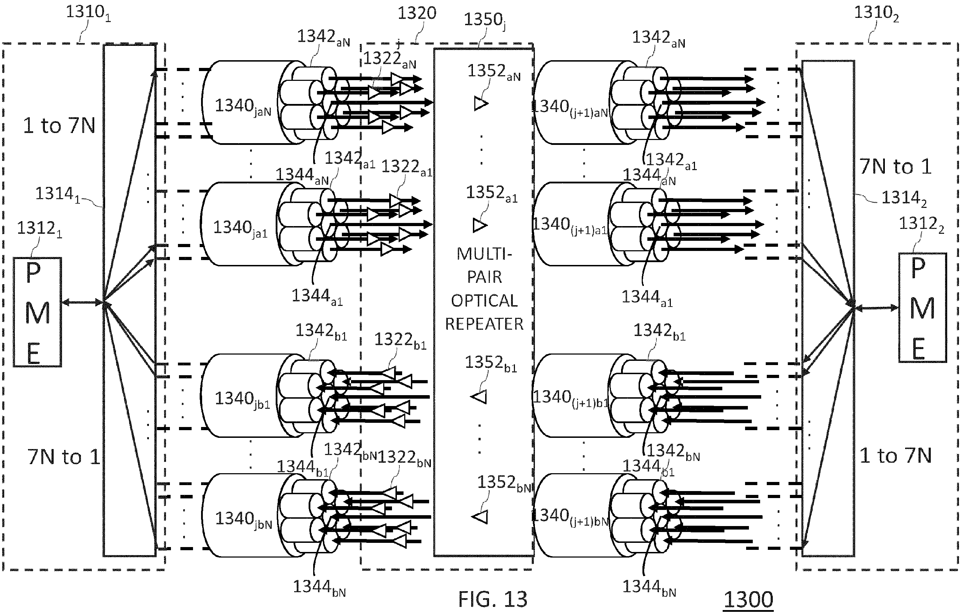

FIG. 13 shows a block diagram of an optical communication system 1300 according to an embodiment having two landing stations 1310₁ and 1310₂ communicating over *N* pairs of seven-fiber, unidirectional multi-fiber cables 1340 with M optical repeater sub-systems 1320 supporting those communications, where *N* is an integer greater than one and *M* is a positive integer. Communication system 1300 is analogous to communication system 1100 of FIG. 11 with similar elements having similar labels, except that, instead of one seven-fiber, unidirectional multi-fiber cable 1140 in each direction, system 1300 has multiple seven-fiber, unidirectional multi-fiber cables 1340 in each direction, and, instead of single-pair optical repeaters 1150, system 1300 has multi-pair optical repeaters 1350. The multi-pair optical repeaters 1350 can be implemented using any suitable multi-pair optical repeater such as (without limitation) the multi-pair optical repeater 950ⱼ of FIG. 9 or the multi-pair optical repeater 1050ⱼ of FIG. 10. Like system 1100 of FIG. 11, system 1300 of FIG. 13 can provide sequential supervisory and/or OTDR monitoring of all 14*N* optical paths in the system.

Those skilled in the art will understand that, in other embodiments, instead of multiple pairs of unidirectional multi-fiber cables as in FIG. 13, optical communication systems can have multiple pairs of bidirectional multi-fiber cables that have multi-pair optical repeaters that support the monitoring of only a subset of the fibers in each multi-fiber cable. Note that the rest of the fibers can be monitored using the technique illustrated in FIG. 12B relying on inter-fiber coupling.

Although embodiments have been described having seven-fiber multi-fiber cables with six outer optical fibers and one center optical fiber, those skilled in the art will understand that alternative embodiments may have multi-fiber cables with different numbers of optical fibers in different configurations, as long as the multi-fiber cables provide suitable inter-fiber optical coupling.

Although specific embodiments have been described in which optical repeaters have optical filters that are shared by multiple different pairs of optical paths, in general, optical repeaters may be said to have shared optical elements that modify the applied optical signals, where those shared optical elements could be (without limitation) optical filters or optical attenuators.

Although symmetrical optical communication systems have been described in which the number of optical paths flowing from the first landing station to the second landing station is equal to the number of optical paths flowing from the second landing station to the first landing station, in alternative, asymmetrical optical communication systems, those two numbers of optical paths are different. Those skilled in the art will understand that optical repeaters can be designed for such asymmetrical systems. For example, if the communication system 800 of FIG. 8 had *N* first optical paths 830ₐ and *M* second optical paths 830_{b}, where *N*≠*M,* then the optical repeater 950ⱼ of FIG. 9 or the optical repeater 1050ⱼ of FIG. 10 could be modified to employ 1xM active switches S3 and S4 (or alternatively 1xM passive couplers). Similarly, in the embodiments of FIGs. 11-13, the number of fibers in each multi-fiber cable need not be the same.

Although embodiments have been described in the context of submarine applications in which the optical communication system has terrestrial landing stations and intermediate optical repeaters that are located under water, embodiments can also be implemented for terrestrial applications in which the "landing stations" and the optical repeaters are located on land as well as hybrid applications in which the landing stations and some of the optical repeaters are located on land with the rest of the optical repeaters located under water.

According to an example embodiment disclosed above, e.g., in the summary section and/or in reference to any one or any combination of some or all of FIGs. 1-13, provided is an apparatus comprising an optical repeater (850, 950, 1050, 1120, 1220, 1320) having (i) a plurality of first input ports (INₐ) and a plurality of first output ports (OUTₐ) for a plurality of first optical paths (830ₐ, 1130ₐ, 1230ₐ) and (ii) a plurality of second input ports (IN_{b}) and a plurality of second output ports (OUT_{b}) for a plurality of second optical paths (830_{b}, 1130_{b}, 1230_{b}), each first optical path having a corresponding second optical path. The optical repeater comprises a plurality of first optical amplifiers (960ₐ, 1060ₐ, 1122ₐ/1152ₐ, 1222ₐ/1252ₐ, 1322ₐ/1352ₐ), each first optical amplifier connecting a first input port and a corresponding first output port for a corresponding first optical path; a plurality of second optical amplifiers (960_{b}, 1060_{b}, 1122_{b}/1152_{b}, 1222_{b}/1252_{b}, 1322_{b}/1352_{b}), each second optical amplifier connecting a second input port and a corresponding second output port for a corresponding second optical path; and a set of shared optical elements (910/920, 1020, 610/620), wherein each optical element is configured to receive, modify, and forward optical signals between each of the first optical paths and its corresponding second optical path.

In some embodiments of the above apparatus, for each first optical path (830ₐ) and its corresponding second optical path (830_{b}), the optical repeater (850, 950, 1050) further comprises one or more optical couplers (C2/C4, C10) configured to forward optical signals from the first optical path to the corresponding second optical path via one or more of the shared optical elements; and one or more other optical couplers (C2/C4, C10) configured to forward optical signals from the corresponding second optical path to the first optical path via one or more of the shared optical elements.

In some embodiments of any of the above apparatus, the optical repeater (850, 950, 1050) further comprises a plurality of active switches (S1-S4) configurable to route optical signals between a selected first optical path and its corresponding second optical path.

In some embodiments of any of the above apparatus, the optical repeater (850, 950, 1050) further comprises a plurality of passive couplers configured to route optical signals between each first optical path and its corresponding second optical path.

In some embodiments of any of the above apparatus, the optical repeater (850, 950, 1050, 1120, 1220, 1320) further comprises one or more optical pathways (930ₐ/930_{b}, 1012/1016, 630, 730ₐ/730_{b}), each optical pathway configured to route optical signals between a first optical path and its corresponding second optical path without passing through the set of shared optical elements.

In some embodiments of any of the above apparatus, the optical repeater is a multi-pair optical repeater (950, 1050).

In some embodiments of any of the above apparatus, the first optical paths (1130ₐ, 1230ₐ) correspond to one or more first multi-fiber optical cables (1140ₐ, 1240ₐ, 1340ₐ); the second optical paths (1130_{b}, 1230_{b}) correspond to one or more second multi-fiber optical cables (1140_{b}, 1240_{b}, 1340_{b}); and the optical repeater comprises, for each pair of first and second multi-fiber optical cables outer first optical amplifiers (1122ₐ, 1222ₐ, 1322ₐ) for outer fibers (1142ₐ, 1242ₐ, 1342ₐ) of the first multi-fiber optical cable; outer second optical amplifiers (1122_{b}, 1222_{b}, 1322_{b}) for outer fibers (1142_{b}, 1242_{b}, 1342_{b}) of the second multi-fiber optical cable; a first optical amplifier (1152ₐ, 1252ₐ, 1352ₐ) for a center fiber (1144ₐ, 1244ₐ, 1344ₐ) of the first multi-fiber optical cable; a second optical amplifier (1152_{b}, 1252_{b}, 1352_{b}) for a center fiber (1144_{b}, 1244_{b}, 1344_{b}) of the second multi-fiber optical cable; and one or more shared optical elements (910/920, 1020, 610/620), wherein each optical element is configured to receive, modify, and forward optical signals between the center fiber of the first multi-fiber optical cable and the center fiber of the second multi-fiber optical cable.

In some embodiments of any of the above apparatus, the first and second multi-fiber optical cables (1140ₐ/1140_{b}, 1340ₐ/1340_{b}) are unidirectional optical cables.

In some embodiments of any of the above apparatus, the first and second multi-fiber optical cables (1240ₐ/1240_{b}) are bidirectional optical cables.

According to another example embodiment disclosed above, e.g., in the summary section and/or in reference to any one or any combination of some or all of FIGs. 1-13, provided is a method for monitoring optical paths of an optical communication system having a plurality of first optical paths (830ₐ, 1130ₐ, 1230ₐ) and a plurality of second optical paths (830_{b}, 1130_{b}, 1230_{b}) between a first landing station (810₁, 1110₁, 1210₁, 1310₁) and a second landing station (810₂, 1110₂, 1210₂, 1310₂), each first optical path having a corresponding second optical path. The method comprises receiving, at the above-described optical repeater, a first monitoring signal from the first landing station via a first optical path; modifying the first monitoring signal by at least one shared optical element of the optical repeater; and transmitting, from the optical repeater, the modified first monitoring signal to the first landing station via the second optical path corresponding to the first optical path.

In some embodiments of the above method, the method further comprises receiving, at the optical repeater, a second monitoring signal from the second landing station via the second optical path; modifying the second monitoring signal by at least one shared optical element of the optical repeater; and transmitting, from the optical repeater, the modified second monitoring signal to the second landing station via the first optical path.

In some embodiments of any of the above methods, the method further comprises receiving, at the optical repeater, a third monitoring signal from the first landing station via a different first optical path; modifying the third monitoring signal by the at least one shared optical element; and transmitting, from the optical repeater, the modified third monitoring signal to the first landing station via the second optical path corresponding to the different first optical path.

In some embodiments of any of the above methods, the first optical paths (1230ₐ) correspond to one or more bidirectional first multi-fiber optical cables (1240ₐ); the second optical paths (1230_{b}) correspond to one or more bidirectional second multi-fiber optical cables (1240_{b}); and the method further comprises transmitting a fourth monitoring signal from the first landing station via a first optical path, wherein the fourth monitoring signal is coupled into a second optical path adjacent to the first optical path as an induced fourth monitoring signal propagating towards the first landing station; and receiving the induced fourth monitoring signal at the first landing station via the second optical path.

According to still another example embodiment disclosed above, e.g., in the summary section and/or in reference to any one or any combination of some or all of FIGs. 1-13, provided is a method for monitoring optical paths of an optical communication system having a plurality of first optical paths (1230ₐ) and a plurality of second optical paths (1230_{b}) between a first landing station (1210₁) and a second landing station (1210₂), each first optical path having a corresponding second optical path, the first optical paths (1230ₐ) correspond to one or more bidirectional first multi-fiber optical cables (1240ₐ), and the second optical paths (1230_{b}) correspond to one or more bidirectional second multi-fiber optical cables (1240_{b}). The method comprises transmitting a first monitoring signal from the first landing station via a first optical path, wherein the first monitoring signal is coupled into a second optical path adjacent to the first optical path as an induced first monitoring signal propagating towards the first landing station; and receiving the induced first monitoring signal at the first landing station via the second optical path.

In some embodiments of the above method, the method further comprises transmitting a second monitoring signal from the second landing station via the second optical path, wherein the second monitoring signal is coupled into the first optical path as an induced second monitoring signal propagating towards the second landing station; and receiving the induced second monitoring signal at the second landing station via the first optical path.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure as expressed in the following claims.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements. The same type of distinction applies to the use of terms "attached" and "directly attached," as applied to a description of a physical structure. For example, a relatively thin layer of adhesive or other suitable binder can be used to implement such "direct attachment" of the two corresponding components in such physical structure.

As used herein in reference to an element and a standard, the term compatible means that the element communicates with other elements in a manner wholly or partially specified by the standard, and would be recognized by other elements as sufficiently capable of communicating with the other elements in the manner specified by the standard. The compatible element does not need to operate internally in a manner specified by the standard.

The described embodiments are to be considered in all respects as only illustrative and not restrictive. In particular, the scope of the disclosure is indicated by the appended claims rather than by the description and figures herein. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions.

## Claims

1. An apparatus comprising an optical repeater (850, 950, 1050, 1120, 1220, 1320)
having (i) a plurality of first input ports (INₐ) and a plurality of first output ports (OUTₐ) for a plurality of first optical paths (830ₐ, 1130ₐ, 1230ₐ) and (ii) a plurality of second inputports (IN_{b}) and a plurality of second output ports (OUT_{b}) for a plurality of second optical paths (830_{b}, 1130_{b}, 1230_{b}), each first optical path having a corresponding second optical path, wherein the corresponding second optical path is in the opposite direction to the first optical path, the optical repeater comprising:
a plurality of first optical amplifiers (960a, 1060a, 1122a/1152a, 1222a/1252a, 1322a/1352a), each first optical amplifier connecting a first input port and a corresponding first output port for a corresponding first optical path;
a plurality of second optical amplifiers (960b, 1060b, 1122b/1152b, 1222b/1252b, 1322b/1352b), each second optical amplifier connecting a second input port and a corresponding second output port for a corresponding second optical path;
the apparatus being **characterized in** the fact that the optical repeater comprises a set of shared optical elements (910/920, 1020, 610/620), wherein each optical element is configured to receive, modify, and forward optical signals between each of the first optical paths and its corresponding second optical path, wherein at least one of the shared optical elements comprises a filter or an attenuator.

2. The apparatus of claim 1, wherein, for each first optical path (830a) and its corresponding second optical path (830b), the optical repeater (850, 950, 1050) further comprises:
one or more optical couplers (C2/C4, C10) configured to forward optical signals from the first optical path to the corresponding second optical path via one or more of the shared optical elements; and
one or more other optical couplers (C2/C4, C10) configured to forward optical signals from the corresponding second optical path to the first optical path via one or more of the shared optical elements.

3. The apparatus of any one of claims 1-2, wherein the optical repeater (850, 950,1050) further comprises a plurality of active switches (S1-S4) configurable to route optical signals between a selected first optical path and its corresponding second optical path.

4. The apparatus of any one of claims 1-2, wherein the optical repeater (850, 950, 1050) further comprises a plurality of passive couplers configured to route optical signals between each first optical path and its corresponding second optical path.

5. The apparatus of any one of claims 1-4, wherein the optical repeater (850, 950, 1050, 1120, 1220, 1320) further comprises one or more optical pathways (930a/930b, 1012/1016, 630, 730a/730b), each optical pathway configured to route optical signals between a first optical path and its corresponding second optical path without passing through the set of shared optical elements.

6. The apparatus of any one of claims 1-5, wherein the optical repeater is a multi-pair optical repeater (950, 1050).

7. The apparatus of any one of claims 1-6, wherein:
the first optical paths (1130a, 1230a) correspond to one or more first multi-fiber optical cables (1140a, 1240a, 1340a);
the second optical paths (1130b, 1230b) correspond to one or more second multi-fiber optical cables (1140b, 1240b, 1340b); and
the optical repeater comprises, for each pair of first and second multifiber optical cables:
outer first optical amplifiers (1122a, 1222a, 1322a) for outer fibers (1142a, 1242a, 1342a) of the first multi-fiber optical cable;
outer second optical amplifiers (1122b, 1222b, 1322b) for outer fibers (1142b, 1242b, 1342b) of the second multi-fiber optical cable;
a center first optical amplifier (1152a, 1252a, 1352a) for a center fiber (1144a, 1244a, 1344a) of the first multi-fiber optical cable;
a center second optical amplifier (1152b, 1252b, 1352b) for a center fiber (1144b, 1244b, 1344b) of the second multi-fiber optical cable; and
one or more shared optical elements (910/920, 1020, 610/620), wherein each optical element is configured to receive, modify, and forward optical signals between the center fiber of the first multi-fiber optical cable and the center fiber of the second multi- fiber optical cable.

8. The apparatus of claim 7, wherein the first and second multi-fiber optical cables (1140ₐ/1140_{b}, 1340ₐ/1340_{b}) are unidirectional optical cables.

9. The apparatus of claim 7, wherein the first and second multi-fiber optical cables (1240ₐ/1240_{b}) are bidirectional optical cables.

10. A method for monitoring optical paths of an optical communication system having a plurality of first optical paths (830ₐ, 1130ₐ, 1230ₐ) and a plurality of second optical paths (830_{b}, 1130_{b}, 1230_{b}) between a first landing station (810₁, 1110₁, 1210₁, 1310₁) and a second landing station (810₂, 1110₂, 1210₂, 1310₂), each of said first optical paths having a corresponding one of said second optical paths in the opposite direction and having an optical repeater according to claim 1 between the first and second landing stations, the method comprising:
receiving, at the optical repeater, a first monitoring signal from the first landing station via one of said first optical paths;
modifying the first monitoring signal by at least one shared optical element of the optical repeater; and
transmitting, from the optical repeater, the modified first monitoring signal to the first landing station via the second optical path corresponding to said one of the first optical paths.

11. The method of claim 10, further comprising:
receiving, at the optical repeater, a second monitoring signal from the second landing station via the second optical path;
modifying the second monitoring signal by at least one shared optical element of the optical repeater; and
transmitting, from the optical repeater, the modified second monitoring signal to the second landing station via said one of the first optical paths.

12. The method of any one of claims 10-11, further comprising:
receiving, at the optical repeater, a third monitoring signal from the first landing station via a different one of said first optical paths;
modifying the third monitoring signal by the at least one shared optical element; and
transmitting, from the optical repeater, the modified third monitoring signal to the first landing station via the second optical path corresponding to the different first optical path.

13. The method of any one of claims 10-12, wherein:
the first optical paths (1230a) correspond to one or more bidirectional first multi-fiber optical cables (1240a);
the second optical paths (1230b) correspond to one or more bidirectional second multi- fiber optical cables (1240b); and
the method further comprising:
transmitting a fourth monitoring signal from the first landing station via a first optical path,
wherein the fourth monitoring signal is coupled into a second optical path adjacent to the first optical path as an induced fourth monitoring signal propagating towards the first landing station, wherein the induced fourth monitoring signal is due to intrinsic fiber-to-fiber coupling; and
receiving the induced fourth monitoring signal at the first landing station via the second optical path.

14. A method for monitoring optical paths of an optical communication system having a plurality of first optical paths (1230ₐ) and a plurality of second optical paths (1230_{b}) between a first landing station (12101) and a second landing station (12102), each first optical path having a corresponding second optical path in the opposite direction and having an optical repeater according to claim 1 between the first and second landing stations,
wherein the first optical paths (1230a) correspond to one or more bidirectional first multi-fiber optical cables (1240a), and the second optical paths (1230b) correspond to one or more bidirectional second multi-fiber optical cables (1240b),
the method comprising:
transmitting a first monitoring signal from the first landing station towards the optical repeater via one of the first optical paths, wherein the first monitoring signal is coupled into one of the second optical paths adjacent to the one of the first optical paths as an induced first monitoring signal propagating towards the first landing station, wherein the induced first monitoring signal is due to intrinsic fiber-to-fiber coupling; and
receiving the induced first monitoring signal at the first landing station via the second optical path.

15. The method of claim 14, further comprising:
transmitting a second monitoring signal from the second landing station via the one of the second optical paths, wherein the second monitoring signal is coupled into the first optical path as an induced second monitoring signal propagating towards the second landing station, wherein the induced second monitoring signal is due to intrinsic fiber-to-fiber coupling; and
receiving the induced second monitoring signal at the second landing station via the one of the first optical paths.

## Patentansprüche

1. Vorrichtung umfassend einen optischen Zwischenverstärker (850, 950, 1050, 1120, 1220, 1320) mit
(i) einer Vielzahl von ersten Eingangsanschlüssen (INₐ) und einer Vielzahl von ersten Ausgangsanschlüssen (OUTₐ) für eine Vielzahl von ersten optischen Pfaden (830ₐ, 1130ₐ, 1230ₐ) und
(ii) einer Vielzahl von zweiten Eingangsanschlüssen (IN_{b}) und einer Vielzahl von zweiten Ausgangsanschlüssen (OUT_{b}) für eine Vielzahl von zweiten optischen Pfaden (830_{b}, 1130_{b}, 1230_{b}), wobei jeder erste optische Pfad einen entsprechenden zweiten optischen Pfad aufweist, wobei der entsprechende zweite optische Pfad in der entgegengesetzten Richtung zu dem ersten optischen Pfad verläuft, wobei der optische Zwischenverstärker Folgendes umfasst:
eine Vielzahl von ersten optischen Verstärkern (960a, 1060a, 1122a/1152a, 1222a/1252a, 1322a/1352a), wobei jeder erste optische Verstärker einen ersten Eingangsanschluss und einen entsprechenden ersten Ausgangsanschluss für einen entsprechenden ersten optischen Pfad verbindet;
eine Vielzahl von zweiten optischen Verstärkern (960b, 1060b, 1122b/1152b, 1222b/1252b, 1322b/1352b), wobei jeder zweite optische Verstärker einen zweiten Eingangsanschluss und einen entsprechenden zweiten Ausgangsanschluss für einen entsprechenden zweiten optischen Pfad verbindet;
wobei die Vorrichtung **dadurch gekennzeichnet ist, dass** der optische Zwischenverstärker einen Satz gemeinsam genutzter optischer Bauteile (910/920, 1020, 610/620) umfasst, wobei jedes optische Bauteil dafür konfiguriert ist, optische Signale zwischen jedem der ersten optischen Pfade und seinem entsprechenden zweiten optischen Pfad zu empfangen, zu modifizieren und weiterzuleiten, wobei mindestens eines der gemeinsam genutzten optischen Bauteile ein Filter oder einen Abschwächer umfasst.

2. Vorrichtung nach Anspruch 1, wobei der optische Zwischenverstärker (850, 950, 1050) für jeden ersten optischen Pfad (830a) und seinen entsprechenden zweiten optischen Pfad (830b) ferner Folgendes umfasst:
einen oder mehrere optische Koppler (C2/C4, C10), die dafür konfiguriert sind, optische Signale von dem ersten optischen Pfad über eines oder mehrere der gemeinsam genutzten optischen Bauteile an den entsprechenden zweiten optischen Pfad weiterzuleiten; und
einen oder mehrere weitere optische Koppler (C2/C4, C10), die dafür konfiguriert sind, optische Signale von dem entsprechenden zweiten optischen Pfad über eines oder mehrere der gemeinsam genutzten optischen Bauteile an den ersten optischen Pfad weiterzuleiten.

3. Vorrichtung nach einem der Ansprüche 1 bis 2, wobei der optische Zwischenverstärker (850, 950, 1050) ferner eine Vielzahl von aktiven Schaltern (S1-S4) umfasst, die so konfiguriert werden können, dass sie optische Signale zwischen einem ausgewählten ersten optischen Pfad und seinem entsprechenden zweiten optischen Pfad zu leiten.

4. Vorrichtung nach einem der Ansprüche 1 bis 2, wobei der optische Zwischenverstärker (850, 950, 1050) ferner eine Vielzahl von passiven Kopplern umfasst, die dafür konfiguriert sind, optische Signale zwischen jedem ersten optischen Pfad und seinem entsprechenden zweiten optischen Pfad zu leiten.

5. Vorrichtung nach einem der Ansprüche 1 bis 4, wobei der optische Zwischenverstärker (850, 950, 1050, 1120, 1220, 1320) ferner einen oder mehrere optische Pfade (930a/930b, 1012/1016, 630, 730a/730b) umfasst, wobei jeder optische Pfad dafür konfiguriert ist, optische Signale zwischen einem ersten optischen Pfad und seinem entsprechenden zweiten optischen Pfad zu leiten, ohne den Satz von gemeinsam genutzten optischen Bauteilen zu durchlaufen.

6. Vorrichtung nach einem der Ansprüche 1 bis 5, wobei der optische Zwischenverstärker ein optischer Multipair-Zwischenverstärker (950, 1050) ist.

7. Vorrichtung nach einem der Ansprüche 1 bis 6, wobei:
die ersten optischen Pfade (1130a, 1230a) einem oder mehreren ersten Multi-Glasfaserkabeln (1140a, 1240a, 1340a) entsprechen;
die zweiten optischen Pfade (1130b, 1230b) einem oder mehreren zweiten Multi-Glasfaserkabeln (1140b, 1240b, 1340b) entsprechen; und
der optische Zwischenverstärker für jedes Paar von ersten und zweiten Multi-Glasfaserkabeln Folgendes umfasst:
äußere erste optische Verstärker (1122a, 1222a, 1322a) für die äußeren Fasern (1142a, 1242a, 1342a) des ersten Multi-Glasfaserkabels;
äußere zweite optische Verstärker (1122b, 1222b, 1322b) für die äußeren Fasern (1142b, 1242b, 1342b) des zweiten Multi-Glasfaserkabels;
einen zentralen ersten optischen Verstärker (1152a, 1252a, 1352a) für eine zentrale Faser (1144a, 1244a, 1344a) des ersten Multi-Glasfaserkabels;
einen zentralen zweiten optischen Verstärker (1152b, 1252b, 1352b) für eine zentrale Faser (1144b, 1244b, 1344b) des zweiten Multi-Glasfaserkabels; und
ein oder mehrere gemeinsam genutzte optische Bauteile (910/920, 1020, 610/620), wobei jedes optische Bauteil dafür konfiguriert ist, optische Signale zwischen der zentralen Faser des ersten Multi-Glasfaserkabels und der zentralen Faser des zweiten Multi-Glasfaserkabels zu empfangen, zu modifizieren und weiterzuleiten.

8. Vorrichtung nach Anspruch 7, wobei das erste und das zweite Multi-Glasfaserkabel (1140ₐ/1140_{b}, 1340ₐ/1340_{b}) unidirektionale Glasfaserkabel sind.

9. Vorrichtung nach Anspruch 7, wobei das erste und das zweite Multi-Glasfaserkabel (1240ₐ/1240_{b}) bidirektionale Glasfaserkabel sind.

10. Verfahren zur Überwachung von optischen Pfade eines optischen Kommunikationssystems mit einer Vielzahl von ersten optischen Pfaden (830ₐ, 1130ₐ, 1230ₐ) und einer Vielzahl von zweiten optischen Pfaden (830_{b}, 1130_{b}, 1230_{b}) zwischen einer ersten Anlandestation (810₁, 1110₁, 1210₁, 1310₁) und einer zweiten Anlandestation (810₂, 1110₂, 1210₂, 1310₂), wobei jeder der ersten optischen Pfade einen entsprechenden der zweiten optischen Pfade in der entgegengesetzten Richtung aufweist und einen optischen Zwischenverstärker nach Anspruch 1 zwischen der ersten und der zweiten Anlandestation aufweist, wobei das Verfahren umfasst:
Empfangen eines ersten Überwachungssignals von der ersten Anlandestation über einen der ersten optischen Pfade an dem optischen Zwischenverstärker;
Modifizieren des ersten Überwachungssignals durch mindestens ein gemeinsam genutztes optisches Bauteil des optischen Zwischenverstärkers; und
Übertragen des modifizierten ersten Überwachungssignals von dem optischen Zwischenverstärker zu der ersten Anlandestation über den zweiten optischen Pfad, der dem einen der ersten optischen Pfade entspricht.

11. Verfahren nach Anspruch 10, das ferner umfasst:
Empfangen eines zweiten Überwachungssignals von der zweiten Anlandestation über den zweiten optischen Pfad an dem optischen Zwischenverstärker;
Modifizieren des zweiten Überwachungssignals durch mindestens ein gemeinsam genutztes optisches Bauteil des optischen Zwischenverstärkers; und
Übertragen des modifizierten zweiten Überwachungssignals von dem optischen Zwischenverstärker zu der zweiten Anlandestation über den einen der ersten optischen Pfade.

12. Verfahren nach einem der Ansprüche 10 bis 11, das ferner umfasst:
Empfangen eines dritten Überwachungssignals von der ersten Anlandestation über einen anderen der ersten optischen Pfade an dem optischen Zwischenverstärker;
Modifizieren des dritten Überwachungssignals durch das mindestens eine gemeinsam genutzte optische Bauteil; und
Übertragen des modifizierten dritten Überwachungssignals von dem optischen Zwischenverstärker zu der ersten Anlandestation über den zweiten optischen Pfad, der dem anderen ersten optischen Pfad entspricht.

13. Verfahren nach einem der Ansprüche 10 bis 12, wobei:
die ersten optischen Pfade (1230a) einem oder mehreren bidirektionalen ersten Multi-Glasfaserkabeln (1240a) entsprechen;
die zweiten optischen Pfade (1230b) einem oder mehreren bidirektionalen zweiten Multi-Glasfaserkabeln (1240b) entsprechen; und
wobei das Verfahren ferner umfasst:
Übertragen eines vierten Überwachungssignals von der ersten Anlandestation über einen ersten optischen Pfad, wobei das vierte Überwachungssignal als ein induziertes viertes Überwachungssignal, das sich in Richtung der ersten Anlandestation fortpflanzt, in einen zweiten optischen Pfad angrenzend an den ersten optischen Pfad eingekoppelt wird, wobei das induzierte vierte Überwachungssignal auf eine intrinsische Faser-Faser-Kopplung zurückzuführen ist; und
Empfangen des induzierten vierten Überwachungssignals an der ersten Anlandestation über den zweiten optischen Pfad.

14. Verfahren zur Überwachung von optischen Pfaden eines optischen Kommunikationssystems mit einer Vielzahl von ersten optischen Pfaden (1230ₐ) und einer Vielzahl von zweiten optischen Pfaden (1230_{b}) zwischen einer ersten Anlandestation (1210₁) und einer zweiten Anlandestation (1210₂), wobei jeder erste optische Pfad einen entsprechenden zweiten optischen Pfad in der entgegengesetzten Richtung aufweist und einen optischen Zwischenverstärker nach Anspruch 1 zwischen der ersten und der zweiten Anlandestation aufweist,
wobei die ersten optischen Pfade (1230a) einem oder mehreren bidirektionalen ersten Multi-Glasfaserkabeln (1240a) entsprechen und die zweiten optischen Pfade (1230b) einem oder mehreren bidirektionalen zweiten Multi-Glasfaserkabeln (1240b) entsprechen,
wobei das Verfahren umfasst:
Übertragen eines ersten Überwachungssignals von der ersten Anlandestation zu dem optischen Zwischenverstärker über einen der ersten optischen Pfade, wobei das erste Überwachungssignal als ein induziertes erstes Überwachungssignal, das sich in Richtung der ersten Anlandestation fortpflanzt, in einen der zweiten optischen Pfade angrenzend an den einen der ersten optischen Pfade eingekoppelt wird, wobei das induzierte erste Überwachungssignal auf eine intrinsische Faser-Faser-Kopplung zurückzuführen ist; und
Empfangen des induzierten ersten Überwachungssignals an der ersten Anlandestation über den zweiten optischen Pfad.

15. Verfahren nach Anspruch 14, das ferner umfasst:
Übertragen eines zweiten Überwachungssignals von der zweiten Anlandestation über den einen der zweiten optischen Pfade, wobei das zweite Überwachungssignal als ein induziertes zweites Überwachungssignal, das sich in Richtung der zweiten Anlandestation fortpflanzt, in den ersten optischen Pfad eingekoppelt wird, wobei das induzierte zweite Überwachungssignal auf eine intrinsische Faser-Faser-Kopplung zurückzuführen ist; und
Empfangen des induzierten zweiten Überwachungssignals an der zweiten Anlandestation über den einen der ersten optischen Pfade.

## Revendications

1. Appareil comprenant un répéteur optique (850, 950, 1050, 1120, 1220, 1320) ayant (i) une pluralité de premiers ports d'entrée (INₐ) et une pluralité de premiers ports de sortie (OUTₐ) pour une pluralité de premiers chemins optiques (830ₐ, 1130ₐ, 1230ₐ) et (ii) une pluralité de deuxièmes ports d'entrée (IN_{b}) et une pluralité de deuxièmes ports de sortie (OUT_{b}) pour une pluralité de deuxièmes chemins optiques (830_{b}, 1130_{b}, 1230_{b}), chaque premier chemin optique ayant un deuxième chemin optique correspondant, dans lequel le deuxième chemin optique correspondant est dans la direction opposée au premier chemin optique, le répéteur optique comprenant :
une pluralité de premiers amplificateurs optiques (960ₐ, 1060ₐ, 1122ₐ/1152ₐ, 1222ₐ/1252ₐ, 1322ₐ/1352ₐ), chaque premier amplificateur optique connectant un premier port d'entrée et un premier port de sortie correspondant pour un premier chemin optique correspondant ;
une pluralité de deuxièmes amplificateurs optiques (960_{b}, 1060_{b}, 1122_{b}/1152_{b}, 1222_{b}/1252_{b}, 1322_{b}/1352_{b}), chaque deuxième amplificateur optique connectant un deuxième port d'entrée et un deuxième port de sortie correspondant pour un deuxième chemin optique correspondant ;
l'appareil étant **caractérisé par le fait que** le répéteur optique comprend un ensemble d'éléments optiques partagés (910/920, 1020, 610/620), dans lequel chaque élément optique est configuré pour recevoir, modifier et transmettre des signaux optiques entre chacun des premiers chemins optiques et son deuxième chemin optique correspondant, dans lequel au moins l'un des éléments optiques partagés comprend un filtre ou un atténuateur.

2. Appareil selon la revendication 1, dans lequel, pour chaque premier chemin optique (830ₐ) et son deuxième chemin optique correspondant (830_{b}), le répéteur optique (850, 950, 1050) comprend en outre :
un ou plusieurs coupleurs optiques (C2/C4, C10) configurés pour transmettre des signaux optiques du premier chemin optique au deuxième chemin optique correspondant via un ou plusieurs des éléments optiques partagés ; et
un ou plusieurs autres coupleurs optiques (C2/C4, C10) configuré pour transmettre signaux optiques du deuxième chemin optique correspondant au premier chemin optique via un ou plusieurs des éléments optiques partagés.

3. Appareil selon l'une des revendications 1 et 2, dans lequel le répéteur optique (850, 950, 1050) comprend en outre une pluralité de commutateurs actifs (S1-S4) configurables pour router des signaux optiques entre un premier chemin optique sélectionné et son deuxième chemin optique correspondant.

4. Appareil selon l'une des revendications 1 et 2, dans lequel le répéteur optique (850, 950, 1050) comprend en outre une pluralité de coupleurs passifs configurés pour router des signaux optiques entre chaque premier chemin optique et son deuxième chemin optique correspondant.

5. Appareil selon l'une des revendications 1 à 4, dans lequel le répéteur optique (850, 950, 1050, 1120, 1220, 1320) comprend en outre une ou plusieurs voies optiques (930ₐ/930_{b}, 1012/1016, 630, 730ₐ/730_{b}), chaque voie optique étant configurée pour router des signaux optiques entre un premier chemin optique et son deuxième chemin optique correspondant sans passer par l'ensemble d'éléments optiques partagés.

6. Appareil selon l'une des revendications 1 à 5, dans lequel le répéteur optique est un répéteur optique (950, 1050) à paires multiples.

7. Appareil selon l'une des revendications 1 à 6, dans lequel :
les premiers chemins optiques (1130ₐ, 1230ₐ) correspondent à un ou plusieurs premiers câbles optiques multifibre (1140ₐ, 1240ₐ, 1340ₐ);
les deuxièmes chemins optiques (1130_{b}, 1230_{b}) correspondent à un ou plusieurs deuxièmes câbles optiques multifibre (1140_{b}, 1240_{b}, 1340_{b}) ; et
le répéteur optique comprend, pour chaque paire de premier et deuxième câbles optiques multifibre :
des premiers amplificateurs optiques extérieurs (1122ₐ, 1222ₐ, 1322ₐ) pour des fibres extérieures (1142ₐ, 1242ₐ, 1342ₐ) du premier câble optique multifibre ;
des deuxièmes amplificateurs optiques extérieurs (1122_{b}, 1222_{b}, 1322_{b}) pour des fibres extérieures (1142_{b}, 1242_{b}, 1342_{b}) du deuxième câble optique multifibre ;
un premier amplificateur optique central (1152ₐ, 1252ₐ, 1352ₐ) pour une fibre centrale (1144ₐ, 1244ₐ, 1344ₐ) du premier câble optique multifibre ;
un deuxième amplificateur optique central (1152_{b}, 1252_{b}, 1352 fibre centrale) pour une fibre centrale (1144_{b}, 1244_{b}, 1344^{b}) du deuxième câble optique multifibre ; et
un ou plusieurs éléments optiques partagés (910/920, 1020, 610/620), dans lequel chaque élément optique est configuré pour recevoir, modifier et transmettre des signaux optiques entre la fibre centrale du premier câble optique multifibre et la fibre centrale du deuxième câble optique multifibre.

8. Appareil selon la revendication 7, dans lequel les premier et deuxième câbles optiques multifibre (1140ₐ/1140_{b}, 1340ₐ/1340_{b}) sont des câbles optiques unidirectionnels.

9. Appareil selon la revendication 7, dans lequel les premier et deuxième câbles optiques multifibre (1240ₐ/1240_{b}) sont des câbles optiques bidirectionnels.

10. Procédé de surveillance de chemins optiques d'un système de communication optique ayant une pluralité de premiers chemins optiques (830ₐ, 1130ₐ, 1230ₐ) et une pluralité de deuxièmes chemins optiques (830_{b}, 1130_{b}, 1230_{b}) entre une première station de débarquement (810₁, 1110₁, 1210₁, 1310₁) et une deuxième station de débarquement (810₂, 1110₂, 1210₂, 1310₂), chacun desdits premiers chemins optiques ayant un chemin correspondant desdits deuxièmes chemins optiques dans la direction opposée et ayant un répéteur optique selon la revendication 1 entre les première et deuxième stations de débarquement, le procédé comprenant :
la réception de la première station de débarquement, au niveau du répéteur optique, d'un premier signal de surveillance via l'un desdits premiers chemins optiques ;
la modification du premier signal de surveillance par au moins un élément optique partagé du répéteur optique ; et
l'émission, par le répéteur optique, du premier signal de surveillance modifié vers la première station de débarquement via le deuxième chemin optique correspondant audit un des premiers chemins optiques.

11. Procédé selon la revendication 10, comprenant en outre :
la réception de la deuxième station de débarquement, au niveau du répéteur optique, d'un deuxième signal de surveillance via le deuxième chemin optique ;
la modification du deuxième signal de surveillance par au moins un élément optique partagé du répéteur optique ; et
l'émission, par le répéteur optique, du deuxième signal de surveillance modifié vers la deuxième station de débarquement via ledit un des premiers chemins optiques.

12. Procédé selon l'une des revendications 10 et 11, comprenant en outre :
la réception de la première station de débarquement, au niveau du répéteur optique, d'un troisième signal de surveillance via un autre desdits premiers chemins optiques ;
la modification du troisième signal de surveillance par l'au moins un élément optique partagé ; et
l'émission, par le répéteur optique, du troisième signal de surveillance modifié vers la première station de débarquement via le deuxième chemin optique correspondant à l'autre premier chemin optique.

13. Procédé selon l'une des revendications 10 à 12, dans lequel :
les premiers chemins optiques (1230ₐ) correspondent à un ou plusieurs premiers câbles optiques multifibre (1240ₐ) bidirectionnels ;
les deuxièmes chemins optiques (1230_{b}) correspondent à un ou plusieurs deuxièmes câbles optiques multifibre (1240_{b}) bidirectionnels ; et
le procédé comprenant en outre :
l'émission d'un quatrième signal de surveillance par la première station de débarquement via un premier chemin optique,
dans lequel le quatrième signal de surveillance est couplé dans un deuxième chemin optique adjacent au premier chemin optique en tant que quatrième signal de surveillance induit se propageant vers la première station de débarquement, dans lequel le quatrième signal de surveillance induit est dû à un couplage intrinsèque fibre à fibre ; et
la réception du quatrième signal de surveillance induit au niveau de la première station de débarquement via le deuxième chemin optique.

14. Procédé de surveillance de chemins optiques d'un système de communication optique ayant une pluralité de premiers chemins optiques (1230ₐ) et une pluralité de deuxièmes chemins optiques (1230_{b}) entre une première station de débarquement (12101) et une deuxième station de débarquement (12102), chaque premier chemin optique ayant un deuxième chemin optique correspondant dans la direction opposée et ayant un répéteur optique selon la revendication 1 entre les première et deuxième stations de débarquement,
dans lequel les premiers chemins optiques (1230ₐ) correspondent à un ou plusieurs premiers câbles optiques multifibre (1240ₐ) bidirectionnels, et les deuxièmes chemins optiques (1230_{b}) correspondent à un ou plusieurs deuxièmes câbles optiques multifibre (1240_{b}) bidirectionnels,
le procédé comprenant :
l'émission d'un premier signal de surveillance par la première station de débarquement vers le répéteur optique via l'un des premiers chemins optiques, dans lequel le premier signal de surveillance est couplé dans l'un des deuxièmes chemins optiques, adjacent à ce premier chemin des premiers chemins optiques, en tant que premier signal de surveillance induit se propageant vers la première station de débarquement, dans lequel le premier signal de surveillance induit est dû à un couplage intrinsèque fibre à fibre ; et
la réception du premier signal de surveillance induit au niveau de la première station de débarquement via le deuxième chemin optique.

15. Procédé selon la revendication 14, comprenant en outre :
l'émission d'un deuxième signal de surveillance par la deuxième station de débarquement via ce deuxième chemin des deuxièmes chemins optiques, dans lequel le deuxième signal de surveillance est couplé dans le premier chemin optique en tant que deuxième signal de surveillance induit se propageant vers la deuxième station de débarquement, dans lequel le deuxième signal de surveillance induit est dû à un couplage intrinsèque fibre à fibre ; et
la réception du deuxième signal de surveillance induit au niveau de la deuxième station de débarquement via ce premier chemin des premiers chemins optiques.
